# EUROPÄISCHE PATENTANMELDUNG

(11) **EP 2 783 566 A1**
(43) Veröffentlichungstag der Anmeldung: **01.10.2014**
(21) Anmeldenummer: 14162373.6
(22) Anmeldetag: 28.03.2014
(51) Int. Cl.: A01G 13/00

(54) **Witterungsschutzvorrichtung für Pflanzenkulturen, insbesondere für Obstbäume, sowie ein Befestigungselement für eine derartige Vorrichtung**

(30) Priorität: 28.03.2013 CH 6892013
(71) Anmelder: Quality Enterprises Establishment, 9490 Balzers (LI)
(72) Erfinder: Federspiel, Walter, 9475 Sevelen (CH)
(74) Vertreter: Riederer Hasler & Partner Patentanwälte AG

(57) **Zusammenfassung**

Die vorliegende Erfindung betrifft ein Befestigungselement, insbesondere ein an einem Support (11) anbringbares Befestigungselement, für eine Witterungsschutzvorrichtung mit einem länglichen eine Längsachse aufweisenden Montageteil und wenigstens einer am Montageteil angeordneten ersten Klemmeinrichtung (35) zum Festklemmen eines ersten Spannseils (15), welches sich dadurch auszeichnet, dass eine zweite Klemmeinrichtung (36) zum Festklemmen eines zweiten Spannseils (17) vorgesehen ist, wobei die erste Klemmeinrichtung und die zweite Klemmeinrichtung in Längsrichtung des Montageteils versetzt zueinander am Montageteil angeordnet sind. Weiter betrifft die vorliegende Erfindung eine Witterungsschutzvorrichtung zum Tragen eines Schutznetzes und/oder einer Schutzfolie, beinhaltend eine Vielzahl der genannten Befestigungselemente.

## Beschreibung

### TECHNISCHES GEBIET DER ERFINDUNG

Das Gebiet der Erfindung umfasst Witterungsschutzvorrichtung zur Überdachung von Pflanzenkulturen, insbesondere für Obstbäume und Beeren, mit Netzen und Folien zum Schutz gegen Witterungseinflüsse wie Hagel, Regen und Sonneneinstrahlung und/oder zum Schutz gegen Insekten.

Die vorliegende Erfindung betrifft insbesondere ein Befestigungselement für eine Witterungsschutzvorrichtung mit einem länglichen eine Längsachse aufweisenden Montageteil und wenigstens einer am Montageteil angeordneten ersten Klemmeinrichtung zum Festklemmen eines ersten Spannseils. Im Weiteren Betrifft die Erfindung eine Witterungsschutzvorrichtung zum Tragen eines Schutznetzes sowie ein Witterungsschutzset. Die Erfindung betrifft zudem eine Montageplakette zum Klemmen und Fixieren von Netzen und Folien. Im Weiteren betrifft die Erfindung ein neues Montageverfahren.

### HINTERGRUND DER ERFINDUNG

Die in der Vergangenheit üblichen Witterungsschutzanlagen für Pflanzenkulturen sind im Allgemeinen nicht zufriedenstellend. Hierfür können verschieden Gründe angeführt werden, wie z.B. zeitintensive, schwierige Montage, viele Einzelkomponenten, ungenügende Lebensdauer einzelner Komponenten, ungenügender Wiederstand gegen Aushebung durch Wind, Beschädigung des Netzes an Gerüstkomponenten, schwierig zu Reparieren, Nachrüsten und/oder Umbauen, etc.

Herkömmlicherweise wird heute mit Kunststoffkappen gearbeitet, welche auf Betonsäulen aufmontiert werden. Diese können in deren Güte je nach Anbieter variieren. Oft sind sehr viele Einzelteile zu Montieren Ein Aufbau mit einer derartigen Kappe besteht aus bis zu zwölf verschiedenen Einzelkomponenten. Die Montage ist dementsprechend kompliziert und zeitaufwendig. Modifikationen oder Nachrüstung an der montierten Anlage sind schwierig.

Die Offenbarungsschrift EP 2 353 370 A1 z.B. offenbart eine Haube zum Aufsetzen auf einen Betonpfosten für Wetterschutzüberdachungen. Die Haube umfasst das obere Ende des Betonpfostens und ist mittels eines Spannelements kraftschlüssig gegen den Betonpfosten spannbar. Eine die Konstruktion überdeckende aus Kunststoff bestehende Schutzkappe mit einem durchsteckenden Schraubschaft dient der Fixierung von Quer- und Längsdrahtverspannung sowie der gleichzeitigen Fixierung eines Schutznetzes. Die oben genannten Probleme können mit einer derartigen Haube nicht allesamt gelöst werden. Insbesondere sind die relativ schwierige Montage, ungenügender Wiederstand gegen Aushebung durch Wind, Beschädigung des Netzes an Schraubschaft auch mit dieser Ausführung nach wie vor problematisch.

Die Offenbarungsschrift WO 2012/175546 A1 offenbart ein Schutzdachsystem, welches dafür ausgelegt ist, besonders starke atmosphärische Turbulenzen zu überstehen, und gleichzeitig dazu geeignet ist Schutzfolien bei Bedarf motorisch auf- und abzuziehen. Zu diesem Zweck werden Schutzfolien auf und mit den Längskabeln abwechslungsweise in jeder zweiten Pfostenreihe über Pfostenspitze und daran befestigtem Querkabel geführt und in jeder dazwischen liegenden Pfostenreihe unter dem Querkabel durchgeführt. Hierbei sind die Pfosten der Querkabel in jeder folgenden Reihe um den halben Pfostenabstand gegeneinander versetzt sodass, wo die Schutzfolie über ein Querkabel gezogen ist, die Schutzfolie auch über eine Pfostenspitze verläuft. Die Schutzfolien werden in diesem System somit in einer Querreihe von unten gestützt (durch Pfosten und Querkabel) und in der nächsten Querreihe von oben gehalten (durch Querkabel). D.h. die Schutzfolien werden von unten und von oben in ihrer Stellung gehalten. Die Pfostenköpfe sind zweckmässigerweise rundlich ausgebildet, um einen möglichst geringen Reibungswiderstand dem Überziehen der Folien entgegenzusetzen. Längs- und Querkabel sind jeweils doppelt verspannt, sodass sich die Kabel jeden Paares jeweils zwischen den Pfosten kreuzen. Eines der Längskabel ist jeweils in einer Rinne über die Pfostenspitze gezogen. Das andere Längskabel ist weiter unten durch ein Loch gezogen. Die Querkabel sind seitlich durch Löcher in den Pfostenköpfen gezogen. Die Position der Pfosten wird an den Pfostenköpfen anscheinend durch eine gewisse Verspannwirkung der überkreuzten Doppelkabel erzeugt. Drei der vier Kabel eines jeden Pfostenkopfes sind anscheinend durch Löcher gezogen, was jedoch eine komplexe und aufwändige Montagearbeit der Anlage voraussetzt. Die Pfosten bleiben relativ zu den Kabeln verschieblich gelagert. Insbesondere Arbeitsintensiv dürfte jedoch das Durchziehen der Kabel durch die Kopflöcher sein. Dieses System ist darauf ausgerichtet das Auf- und Abziehen von Schutzfolien und Schutznetzen zu mechanisieren. Nachteilig ist jedoch der extrem hohe Aufwand, der nötig ist, um die Anlage inklusiv der komplizierten Verspannung aufzustellen bzw. wieder abzubauen.

### AUFGABE

Es ist deshalb eine Aufgabe der vorliegenden Erfindung, eine Vorrichtung für den Witterungsschutz bereitzustellen, mit welcher die eingangs genannten Nachteile weitgehend behoben werden können. Weiterhin sollen eine Witterungsvorrichtung und ein Verfahren zur Verfügung gestellt werden, die eine einfache und schnelle Montage erlauben. Aufgabe der vorliegenden Erfindung ist es auch, einzelne Bauteile der Vorrichtung zu verbessern, um die vorgenannten Nachteile zu beseitigen und eine einfache und schnelle Montage der Vorrichtung zu erzielen. Insbesondere soll auch eine wiederholte Montage von Spannseilen und Schutznetz oder Schutzfolie zügig erfolgen können.

### BESCHREIBUNG DER ERFINDUNG

Erfindungsgemäss wird die Aufgabe durch ein Befestigungselement für eine Witterungsschutzvorrichtung mit einem länglichen eine Längsachse aufweisenden Montageteil und wenigstens einer am Montageteil angeordneten ersten Klemmeinrichtung zum Festklemmen eines ersten Spannseils gelöst, bei welchem eine zweite Klemmeinrichtung zum Festklemmen eines zweiten Spannseils vorgesehen ist, wobei die erste und zweite Klemmeinrichtung in Längsrichtung des Montageteils versetzt zueinander am Montageteil angeordnet sind; oder anders ausgedrückt, wobei die erste und zweite Klemmeinrichtung in Längsrichtung des Montageteils gesehen versetzt zueinander am Montageteil angeordnet sind.

Das Befestigungselement ist insbesondere ein an einem Support anbringbares bzw. montierbares Befestigungselement. Das Befestigungselement ist also derart ausgeführt, dass es an einen Support einer Witterungsanlage montiert werden kann. Als Support für ein Befestigungselement bzw. für eine Vielzahl von Befestigungselementen kann z.B. ein Pfeiler (Supportpfeiler) bzw. eine Vielzahl von Pfeilern eingesetzt werden. Das Befestigungselement ist zweckmässigerweise derart ausgeführt, dass es am Ende eines Pfeilers befestigt werden kann, z.B. indem es auf das Pfeilerende aufgesetzt oder aufgestülpt und darin verankert und/oder festgeklemmt wird.

Eine Vielzahl von erfindungsgemässen Befestigungselementen dient insbesondere zum Verspannen von Supportpfeilern einer Witterungsschutzvorrichtung vorzugsweise in zwei horizontalen Richtungen, wobei die zwei horizontalen Richtungen bevorzugt ungefähr orthogonal zueinander ausgerichtet sind und wobei jedes Spannseil sich üblicherweise unterbruchlos über mehrere Pfeilerabstände erstreckt, vorzugsweise über die gesamte Länge einer Witterungsschutzvorrichtung in jeweils einer der genannten horizontalen Richtungen.

Die beiden Klemmeinrichtungen wirken unabhängig voneinander klemmend. Die Klemmeinrichtungen können somit zeitlich unabhängig voneinander dazu verwendet werden, die einzelne Spannseile nach und nach festzuklemmen.

Die erste und zweite Klemmeinrichtung weisen (d.h. jede der Klemmeinrichtungen weist) zweckmässigerweise jeweils zwei relativ zueinander verstellbare Klemmbacken mit Klemmflächen auf. Es ist bevorzugt, dass die Klemmflächen der Klemmbacken der ersten und zweiten Klemmeinrichtung um 70 bis 110 Grad, vorzugsweise zwischen 80 und 100 Grad, weiter bevorzugt um ungefähr 90 Grad, versetzt zueinander angeordnet sind. Das heisst insbesondere, dass zusätzlich zur oben genannten Versetzung in Längsrichtung des Montageteils die Klemmflächen der Klemmbacken der ersten Klemmeinrichtung gegenüber der Klemmflächen der Klemmbacken der zweiten Klemmeinrichtung um den genannten Winkelgrad um eine Achse parallel zur Längsrichtung (bzw. Längsausdehnung) des Montageteils, insbesondere um die Längsachse des Montageteils, gedreht angeordnet sind. Aufgrund einer derart gegeneinander versetzten Anordnung der Klemmflächen der ersten und zweiten Klemmeinrichtung können in Quer- bzw. Längsreihen einer Pflanzung verlegte Spannseile mittels entsprechend ausgerichteter erster bzw. zweiter Klemmeinrichtung geklemmt werden. Die Klemmbacken einer Klemmeinrichtung können mittels einer Schraubverbindung miteinander verbind- und feststellbar sein. Daraus folgt, dass die beiden Klemmeinrichtung unabhängig voneinander (klemmend) angezogen oder gelöst werden können. Vorzugsweise sind die Klemmbacken mittels Schraube und Klemmscheibe feststellbar.

In einer bevorzugten Ausführung der Erfindung ist das Montageteil als ein zylindrisches Hohlprofil ausgeführt. Ein hohlprofilartiges Montageteil weist eine zylinderartige Mantelwandung auf. Der Querschnitt eines derartigen Montageteils kann zweckmässigerweise rund, insbesondere kreisrund oder oval, oder bevorzugt rechteckig, insbesondere quadratisch sein. Ein hohlprofilartiges Montageteil ist vorzugsweise an einem seiner zwei Enden offen, wodurch sich das Montageteil zum Aufsetzen auf einen Support, wie z.B. einen Pfeiler, eignet.

Vorteilhafterweise ist ein erster Schlitz zur Aufnahme des ersten Spannseils und ein zweiter Schlitz zur Aufnahme des zweiten Spannseils im Montageteil ausgebildet. Zur Montage kann ein Spannseil in einen passenden Schlitze eines auf einen Pfeiler aufgesetzten Montageteils gelegt bzw. positioniert werden. Das Verklemmen und Fixieren mit Hilfe der Klemmeinrichtung kann später erfolgen; z.B. nachdem all Spannseile positioniert sind und die Neigung der Pfosten ausgeglichen ist.

Zur Aufnahme bzw. zum Einführen des ersten Spannseils ist zweckmässigerweise der erste Schlitz bis zur ersten Klemmeinrichtung ausgebildet und zur Aufnahme bzw. zum Einführen des zweiten Spannseils ist der zweite Schlitz bis zur zweiten Klemmeinrichtung ausgebildet.

Zweckmässigerweise, ähnlich der Klemmeinrichtungen, sind die Schlitze in Längsrichtung des Montageteils versetzt zueinander angeordnet. Praktischerweise sind die Schlitze am Montageteil seitlich eingelassen. D.h. die Schlitze (der erste und der zweite Schlitz) sind zweckmässigerweise als Seitenschlitze ausgeführt. Jeder der Schlitze ist mit einer der Klemmeinrichtungen derart gepaart, dass ein durch einen der Schlitze durchgeführtes Spannseil über die Klemmeinrichtung geklemmt und dadurch am Montageteil fixiert werden kann.

Vorteilhafterweise sind die Schlitze mit je zumindest einer Hinterschneidung versehen. Hierbei ist eine Hinterschneidung insbesondere derart ausgeführt, dass ein in einen der Schlitze eingeführtes Spannseil im Schlitz verhakt und nicht ohne weiteres während der Montage der Witterungsschutzvorrichtung wieder aus dem Schlitz ausspringen kann.

Die Schlitze sind bevorzugt als Seitenschlitze ausgeführt. Zum Zweck der Aufnahme bzw. des Einführens des ersten Spannseils in die erste Klemmeinheit ist im Montageteil somit z.B. ein erster Seitenschlitz bis zur ersten Klemmeinrichtung ausgebildet und zum Zweck der Aufnahme bzw. des Einführens des zweiten Spannseils ist im Montageteil z.B. ein zweiter Seitenschlitz bis zur zweiten Klemmeinrichtung ausgebildet. Ist das Befestigungselement als Hohlprofil ausgebildet, durchbrechen die Schlitze die Mantelwandung.

Zum Befestigen des Befestigungselements am Support kann am Montageteil eine Durchgangsbohrung quer zur Längsachse des Montageteils vorgesehen sein. Zweckmässigerweise ist eine solche Durchgangsbohrung als Langloch ausgeführt, vorzugsweise mit Längsausrichtung parallel zur Längsachse des Montageteils. Aufgrund der Ausführung als Langloch ist das Befestigungselement gegenüber dem Support höhenverstellbar. Liegt das Montageteil als Hohlprofil vor, sind vorzugsweise zwei einander gegenüberliegende Durchgangsbohrungen zum Befestigen des Montageteils am Support vorgesehen. Weiter bevorzugt liegt die Durchgangsbohrung bzw. liegen die Durchgangsbohrungen unterhalb der Positionen der beiden Klemmeinrichtungen. Das Montageteil ist durch die durchführende Befestigung am Support vollkommen gegen Ausheben durch äussere Einflüsse (wie z.B. Wind) geschützt.

Gewisse Aspekte der oben genannten Aufgabe sind durch eine erfindungsgemässe Montageplakette gelöst. Die erfindungsgemässe Montageplakette beinhaltet ein erstes Ringteil mit einer ersten Ringfläche und ein zweites Ringteil mit einer zweiten Ringfläche, wobei die beiden Ringflächen mit Verhakungselementen ausgestattet sind, welche derart angeordnet sind, dass die Verhakungselemente beim Zusammenpassen der ersten Ringfläche mit der zweiten Ringfläche mit Verhakungselementen des jeweils anderen Ringteils verhaken können. Die zwei Ringteile, insbesondere die Ringflächen, sind - ähnlich einem Klettverschluss - verhakbar, d.h. wenn die Ringteile gegeneinander gepresst werden, verhaken diese miteinander. Die Verhakungselemente sind vorzugsweise derart ausgestaltet, dass sie hinter der ersten oder zweiten Ringfläche miteinander verhaken, sodass die Ringflächen im Verhakten zustand gegeneinander pressen. Die beiden Ringflächen sind somit im Wesentlichen flächenschlüssig verbindbar. Dies hat den Vorteil dass ein darin eingeklemmtes Schutznetz und/oder eine darin eingeklemmte Schutzfolie zum Einen aufgrund der ineinander greifenden Verhakungselemente und zum Anderen aufgrund der flächenschlüssigen Passung und ggf. aufgrund anderer als Rutschstopper fungierender Strukturen auf den Ringflächen nicht verrutschen kann. Die verhakbaren Verhakungselemente beinhalten z.B. Haken und Gegenhaken, wobei jeweils ein Haken auf einer Ringflächen als Partner einem Gegenhaken auf der anderen Ringfläche gegenüberübersteht bzw. gegenüberstehend angeordnet ist.

Vorzugsweise können von der Montageplakette Greifer abstehen, welche zur Befestigung auf Stützstrukturteilen der Witterungsschutzvorrichtung, wie z.B. Spannseilen, insbesondere Spannseilen einer Längsverspannung, und/oder Folienseilen dienen.

Zweckdienlich kann sein, dass die Montageplakette gekrümmt ausgeführt ist, sodass die Krümmung der Montageplakette einer Krümmung eines Schutznetzes und/oder einer Schutzfolie besser angepasst ist. Die Montageplakette ist insbesondere derart gekrümmt ausgeführt, sodass die Krümmung der Montageplakette der Krümmung einem vom Spannseil der Längsverspannung abfallenden Schutznetz oder einer vom Folienseil abfallenden Schutzfolie ungefähr folgen kann. Die Krümmung der Montageplakette hat insbesondere den Vorteil, dass Spannungen (insbesondere Zugspannungen) am Montageplakettenrand hauptsächlich innerhalb der Netzebene bzw. Folienebene wirken, was beim Netz bzw. bei der Folie eine längere Standzeit zur Folge hat.

Vorzugsweise ist die Montageplakette, insbesondere jedes Ringteil, mit Sollbruchstellen ausgestattet. Jedes Ringteil besitzt bevorzugt zwei diametral einander gegenüberliegende Sollbruchstellen, welche vom äusseren Rand des Rings an den inneren Rand des Rings laufen, wobei die Sollbruchstellen eines jeden Ringteils an unterschiedlichen Ringteilpositionen liegen, sodass beim Zusammenfügen der Bruchstücke jedes der zwei Bruchstückhälften eines Ringteils sich mit beiden Bruchstückhälften des jeweils anderen Ringteils verhakt.

Offenbart ist weiterhin eine Witterungsschutzvorrichtung zum Tragen eines Schutznetzes, insbesondere eines aufgespannten Schutznetzes, beinhaltend Befestigungselemente, insbesondere z.B. ein Befestigungselement mit den zuvor genannten Merkmalen, zum Verspannen von Pfeilern in zwei horizontale Richtungen mittels Spannseilen. Erfindungsgemäss wird die oben genannte Aufgabe gelöst indem ein Befestigungselement mit den zuvor genannten Merkmalen, zum Verspannen verwendet wird. Vorzugsweise sind erfindungsgemässe Montageplaketten zum Klemmen und Fixieren eines Schutznetzes und/oder einer Schutzfolie oder anderen Gewebes vorgesehen. Insbesondere dienen Montageplaketten dazu Netze, Folien oder andere Gewebe an die Stützstruktur eines Witterungsschutzvorrichtung und insbesondere an die oben genannten Befestigungselemente, zu fixieren.

Die Vorteile der erfindungsgemässen Vorrichtung liegen darin, dass diese aus nur wenigen Einzelkomponenten besteht und schnell und einfach aufgestellt werden kann.

Eine Witterungsschutzvorrichtung, welche eine Montageplakette mit zumindest einem ersten Ringteil mit einer ersten Ringfläche und einem zweiten Ringteil mit einer zweiten Ringfläche beinhaltet, wobei die Ringflächen miteinander verhakbar sind, hat insbesondere den Vorteil, dass ein Schutznetz und/oder eine Schutzfolie, welches an Befestigungsbereichen durch die beiden Ringteile sandwichartig geklemmt wird, mittels der Montageplakette schonend an der Stützstruktur der Witterungsschutzvorrichtung fixiert werden kann. Vorteilhafterweise kann das Schutznetz mittels der Montageplaketten über die Stützstruktur einer Witterungsschutzvorrichtung, vorzugsweise über ein dafür vorgesehenes Befestigungselement, insbesondere das erfindungsgemässes Befestigungselement, gestülpt werden. Hierbei wird die Montageplaketten bevorzugt mit einem gewissen Spiel in die Befestigungselemente eingehängt, sodass bei Zug auf das aufgespannte Netz die Montageplaketten gegenüber den Befestigungselementen verschiebbar sind. Aufgrund des Spiels zwischen Montageplakette und Befestigungselement kann leichter Zug im Netz durch Nachrutschen der Montageplakette in einem gewissen Mass ausgeglichen werden kann.

Weiter vorteilhafterweise kann die Schutzfolie mittels der Montageplaketten an die Stützstruktur einer Witterungsschutzvorrichtung, vorzugsweise um oder an ein dafür vorgesehenes Befestigungselement, insbesondere das erfindungsgemässes Befestigungselement, gelegt werden. Hierbei wird die Montageplaketten bevorzugt mit einem gewissen Spiel um die Befestigungselemente montiert, sodass bei Zug auf die aufgespannte Schutzfolie die Montageplaketten gegenüber den Befestigungselementen verschiebbar sind. Aufgrund des Spiels zwischen Montageplakette und Befestigungselement kann leichter Zug in der Schutzfolie durch Nachrutschen der Montageplakette in einem gewissen Mass ausgeglichen werden kann.

Zur Erreichung maximaler Stabilität der Witterungsschutzvorrichtung ist bevorzugt, dass
- der Support eine Vielzahl von Pfeilern beinhaltet, welche voneinander beabstandet in Längs- und Querreihen angeordnete sind,
- Spannseile einer Längsverspannung die Pfeiler in Längsreihen miteinander verspannen, und
- Spannseile einer Querverspannung die Pfeiler in Querreihen miteinander verspannen,
wobei die Spannseile der Längsverspannung und der Querverspannung sich an bzw. in den Befestigungselementen kreuzen.

Praktischerweise ist das Schutznetz über den Spannseilen anbringbar. Insbesondere kann somit das gesamte Schutznetz über den Spannseilen ausgebreitet und angebracht werden.

Gegebenenfalls ist die Witterungsschutzvorrichtung derart ausgelegt, dass unterhalb der Spannseile in Längsrichtung (wenn nichts anderes vermerkt bedeutet im Folgenden der Begriff Längsrichtung: parallel der bzw. in Richtung der Längsreihen d.h. der Kulturpflanzungsreihen) Folienseile einziehbar sind. Hierfür können z.B. die Pfeiler unterhalb der aufgesetzten Befestigungselemente je ein Durchgangsloch aufweisen, durch welches das Folienseil parallel zum oberen der beiden Spannseile (i.e. parallel zur Längsverspannung) gezogen werden kann. Das Folienseil kann z.B. dazu dienen eine Schutzfolie zu tragen. Es kann sich hierbei z.B. um eine Regenschutz-, Sonnenschutz-, Hagelschutz- oder andere Folie handeln. Diese Folie könnte gegebenenfalls auch als Netz ausgeführt sein.

Zweckmässigerweise sind Folienarme vorgesehen, welche in Querrichtung in einem Winkel vom Pfeiler (11) abstehen. Folienarme dienen insbesondere dazu eine Schutzfolie bzw. die genannt Schutzfolie zu tragen und/oder zu führen. Sinnvollerweise sind die Folienarme knapp unterhalb des Folienseils am Pfeiler (11) befestigt. Vorzugsweise wird zur Befestigung der Folienarme eine Folienarmhalterung verwendet, welche am Pfeiler befestigbar ist. Vorteilhafterweise sind Folienarmhalterung und Folienarm gelenkig miteinander verbunden. Derartig montierte Folienarme können bei Bedarf abgenommen werden oder in deren Neigung adjustiert werden. Zwischen Folienarm bzw. Folienarmhalterung und der darüber durchgezogenen Querverspannung ist vorzugsweise genügend Platz für eine aufgerollte Folie vorgesehen; vorteilhafterweise ca. 5 bis 15 cm. Die Folienarme, welche von in Querrichtung benachbarten Pfeiler ausspreizen, können bei Bedarf miteinander verbunden sein, z.B. zwecks kompletter Abdeckung.

Es kann weiter in Längsrichtung des Montageteils oberhalb der Spannseile eine Halterung für ein Firstseil vorgesehen sein. Dafür kann am oberen Rand des Befestigungselements, insbesondere des Hohlprofils, ein weiterer Schlitz vorgesehen sein, welcher das Firstseil (25) aufnehmen kann. Ein Firstseil dient z.B. dazu das Schutznetz nach oben hin zu sichern, kann aber auch dazu dienen eine Deckfolie zu tragen.

Die vorgenannte Montageplakette liegt vorzugsweise oberhalb der Spannseile, bzw. auf den Spannseilen, und unterhalb dem Firstseil und wird somit am Befestigungselement zwischen Firstseil und oberem Spannseil an Ort gehalten.

Die vorgenannte Montageplakette liegt gegebenenfalls oberhalb des Folienseils, bzw. auf dem Folienseil, und unterhalb der Spannseile und wird somit am Befestigungselement zwischen Folienseil und unterem Spannseil an Ort gehalten.

Vorteilhafterweise kann auf dem Befestigungselement ein Firstbügel befestigt werden, welcher vorzugsweise zwei Firstbügelarme bildet, sodass am ersten Firstbügelarm ein erstes Firstseitenseil und am zweiten Firstbügelarm ein zweites Firstseitenseil getragen werden können. Dadurch können die Firstseitenseile von Pfeiler zu Pfeiler laufen, insbesondere parallel zum Spannseil in Längsrichtung. Zweckdienlicherweise ist über den Firstbügeln und zwischen den beiden Firstseitenseilen eine Deckfolie anbringbar. Diese Deckfolie kann dazu verwendet werden, die auf dem Folienseil liegende Schutzfolie in ihrem eingerollten Zustand vor Nässe und Sonneneinstrahlung zu schützen.

Befestigungselemente und Firstbügel sind bevorzugt derart ausgestaltet, dass ein Firstseil am Befestigungselement derart über den Firstbügeln eingelegt werden kann, dass das Firstseil die Firstbügel durch Druck von oben fixiert bzw. geklemmt wird. Zu diesem Zweck kann der Firstbügel mittig eingebogen sein, wodurch er Aufgesetzt auf das Hohlprofil einen tiefen Sitz hat und vom Firstseil fixierend gegriffen werden kann. Ein Schlitz mit Hinterschneidung im Befestigungselement kann dabei das Firstseil so positionieren, dass der Firstbügel durch das Firstseil geklemmt wird.

Es ist bevorzugt, dass das erste Spannseil und/oder das zweite Spannseil, ggf. auch das Folienseil, das Firstseil, das erste Firstseitenseil und/ oder das zweite Firstseitenseil, aus Stahl besteht. Alternativ zu den Seilen kann ein Draht verwendet werden, insofern dieser genügend Festigkeit besitzt. Somit werden vorzugsweise Stahlseile oder Stahldrähte verwendet.

Das Befestigungselement kann zum Schutz einen Deckel tragen. Der Deckel ist vorzugsweise über dem Firstbügel angebracht.

Weiter offenbart ist ein Witterungsschutzset beinhaltend Befestigungselemente, insbesondere wie oben dargestellt, und Montageplaketten bestehend zumindest aus einem ersten Ringteil und einem zweiten Ringteil, mit je einer Ringfläche, welche Flächen miteinander verhakbar sind. Vorzugsweise beinhaltet das Witterungsschutzset weiter z.B. Firstbügel, Folienarme, ggf. mit Folienarmhalterung zur Befestigung an einem Support, ein Netz bzw. Teilnetze (insb. Hagelschutznetz, Vogelnetz, etc., diverse Schutzfolien, Seile, wie z.B. Spannseile, Firstseile, Folienseile, Firstseitenseile, und/ oder Support, insbesondere eine Vielzahl von Pfeilern als Support. Ein komplettes Set beinhalten vorteilhaft somit nur wenige verschiedene Einzelkomponenten. Fast alle Bestandteile des Witterungsschutzsets, können aus Stahl oder verzinktem Stahl bestehen.

Erfindungsgemäss wird eine speditive Montage einer Witterungsschutzvorrichtung durch ein Verfahren mit den folgenden Schritten gelöst,
- Aufsetzen von Befestigungselementen, insbesondere der beschriebenen Befestigungselemente, auf eine Vielzahl von Pfeilern,
- Aufstellen der Pfeiler mit nach oben gerichteten Befestigungselementen in parallelen Reihen,
- für eine Längsverspannung, Einlegen von Spannseilen in Befestigungselemente, um diese in einer ersten Richtung mittels längsgerichteter Spannseile zu verbinden,
- für eine Querverspannung, Einlegen von Spannseilen in Befestigungselemente, um diese quer zur ersten Richtung mittels quergerichteter Spannseile zu verbinden,
- Verspannen und Fixieren der Spannseile in Längs- und Querrichtung mittels Klemmelementen der Befestigungselemente, und
- Verlegen eines Netzes,
wobei das Verlegen des Netzes (d.h. die Netzmontage), nach dem Verspannen und Fixieren der Spannseile in Längs- und Querrichtung erfolgt.

Somit ist es möglich, dass das Netz über den Spannseilen ausgebreitet wird (d.h. über allen Spannseilen der Längs- und Querverspannung), insbesondere ohne die Verspannung zu lösen.

Es ist bevorzugt, dass das Netz mittels Montageplaketten an den Befestigungselementen bzw. dem Support positioniert wird. Vorzugsweise können die Montageplaketten mit dem darin verklemmten Netz auf die Befestigungselemente gesteckt werden. Die Montageplaketten kommen dabei über den Spannseilen und ggf. unter einem Firstseil zu liegen. Zusätzlich oder alternativ können die Montageplaketten mit dem darin verklemmten Schutzfolie an bzw. um die Befestigungselemente montiert werden. Die Montageplaketten kommen dabei über den Folienseilen und ggf. unter dem unteren Spannseil zu liegen.

Zweckmässigerweise werden zur Positionierung des Netzes über dem Netz Firstseile zwischen den Befestigungselementen (vorzugsweise in Längsrichtung) aufgezogen und an den Befestigungselementen fixiert. Die Firstseile liegen vorzugsweise in Längsrichtung, d.h. parallel zur bzw. in Richtung der Längsverspannung.

Zusätzliche Vorteile und Ziele der vorliegenden Erfindung ergeben sich aus der nachfolgenden Beschreibung.

### KURZBESCHREIBUNG DER FIGUREN

Nachfolgend wird die Erfindung unter Bezugnahme auf die Figuren in schematischer Darstellung näher beschrieben. Es zeigen:

Weitere bevorzugte Ausführungen der Erfindung ergeben sich aus der nun folgenden Beschreibung eines Ausführungsbeispiels anhand der Figuren. Genannte bevorzugte Merkmale können in beliebiger Kombination verwirklicht werden - soweit sie sich nicht gegenseitig ausschliessen. Es zeigen schematisch, in nicht massstabsgetreuer Darstellung:
- Fig. 1: eine perspektivische Ansicht einer erfindungsgemässen Witterungsschutzvorrichtung;
- Fig. 2: eine Ansicht von schräg oberhalb eines Pfeilers der Witterungsschutzvorrichtung mit Befestigungselement, zwei Spannseilen, einem Firstseil, einem Folienseil, einem First, zwei Firstseitenseilen; einem Deckel, zwei Folienarme und einer Folienarmhalterung;
- Fig. 3: eine Ansicht von schräg oberhalb des um 90° gedrehten Pfeilers der Witterungssehutzvorrichtung;
- Fig. 4: eine Ansicht von schräg unten auf den Pfeiler der Witterungsschutzvorrichtung;
- Fig. 5: eine Ansicht eines erfindungsgemässen Befestigungselements der Witterungsschutzvorrichtung;
- Fig. 6: eine weitere Ansicht des erfindungsgemässen Befestigungselements der Witterungsschutzvorrichtung;
- Fig. 7: eine weitere Ansicht des erfindungsgemässen Befestigungselements der Witterungsschutzvorrichtung;
- Fig. 8: eine weitere Ansicht des erfindungsgemässen Befestigungselements der Witterungsschutzvorrichtung;
- Fig. 9: ein Pfeiler der Witterungsschutzvorrichtung;
- Fig. 10: ein Firstbügel der Witterungsschutzvorrichtung;
- Fig. 11: eine perspektivisch Ansicht einer Klammer der Folienarmhalterung der Witterungsschutzvorrichtung;
- Fig. 12: eine seitliche Ansicht einer Klammer der Folienarmhalterung;
- Fig. 13: eine Teilansicht der Witterungsschutzvorrichtung mit Folienarmverbindung zur benachbarten Kulturpflanzungsreihe;
- Fig. 14: eine Detailansicht der Folienarmverbindung mit Folienprofilstangen und Rastvorrichtung;
- Fig. 15: eine schräge Ansicht auf die Oberseite einer Montageplakette, die Montageplakette beinhaltend zwei zusammensteckbare Platten;
- Fig. 16: eine schräge Ansicht auf die Unterseite der Montageplakette;
- Fig. 17: vier Querschnitte durch die zusammengesteckte Montageplakette: (a), (b), (c) und (d);
- Fig. 18: eine Aufsicht auf die Innenseite (Steckerseite) der unteren Platte der Montageplakette und eine Seitenansicht;
- Fig. 19: eine Aufsicht auf die Aussenseite der unteren Platte der Montageplakette;
- Fig. 20: eine Aufsicht auf die Innenseite (Aufnahmeseite) der oberen Platte der Montageplakette;
- Fig. 21: eine Aufsicht auf die Aussenseite der oberen Platte der Montageplakette und eine Seitenansicht;

### DETAILIERTE BESCHREIBUNG DER FIGUREN

Im Folgenden stehen gleiche Bezugsziffern für gleiche Elemente in unterschiedlichen Figuren. Ein zusätzlicher Apostroph kann zur Unterscheidung mehrerer gleicher Elemente in derselben Figur dienen.

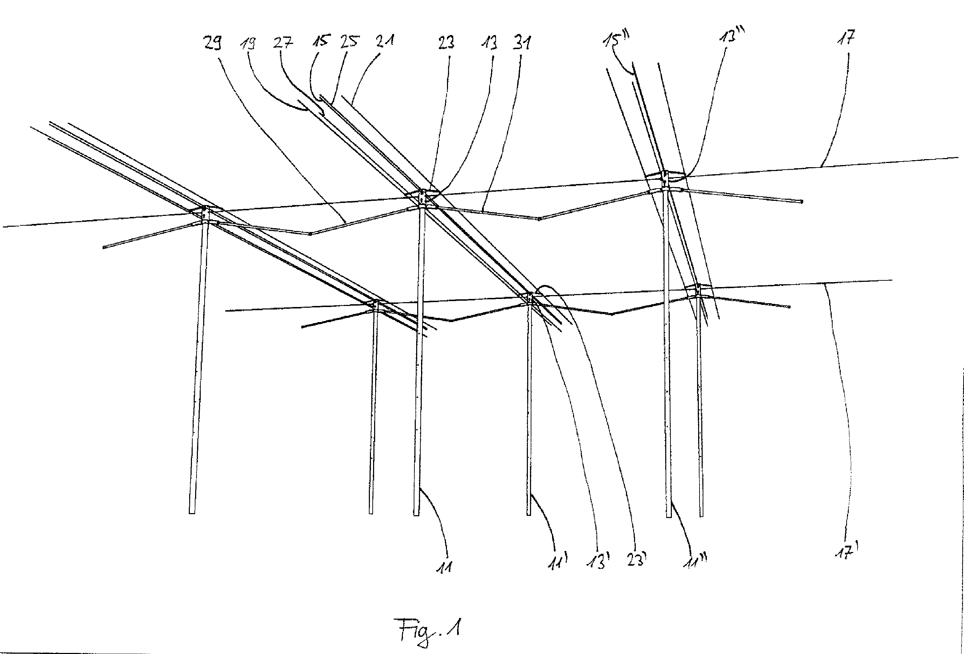

Fig. 1 zeigt eine perspektivische Ansicht einer erfindungsgemässen Witterungsschutzvorrichtung. Die Witterungsschutzvorrichtung beinhaltend mehrere parallele, gerade Reihen von beabstandeten Pfeilern 11,11' (Support) mit aufgesetzten Befestigungselementen 13 bzw. 13'. Ein Befestigungselement ist insbesondere als längliches eine Längsachse aufweisendes Montageteil 14 ausgeführt. Die Pfeiler 11 sind an den Befestigungselementen 13 mit Drähten oder Seilen in Längs- und Querrichtung miteinander verspannt. Im Weiteren wird bei einer Verspannung in Richtung einer Kulturpflanzungsreihe von der Längsverspannung 15 und bei einer Verspannung in Querrichtung zur Kulturpflanzungsreihe von der Querverspannung 17 gesprochen. Die Drähte oder Seile, welche zum Verspannen verwendet werden, werden Spanndraht oder Spannseil genannt. Im Folgenden wird insbesondere der Begriff Spannseil verwendet, welcher - insofern nichts anderes erwähnt ist - mit dem Begriff Spanndraht austauschbar ist. Ein Spannseil (bzw. Spanndraht) erstreckt sich in ungefähr gerader Richtung über mehrere Pfeilerabstände, vorzugsweise jeweils über die gesamte Länge oder Breite einer Witterungsschutzvorrichtung.

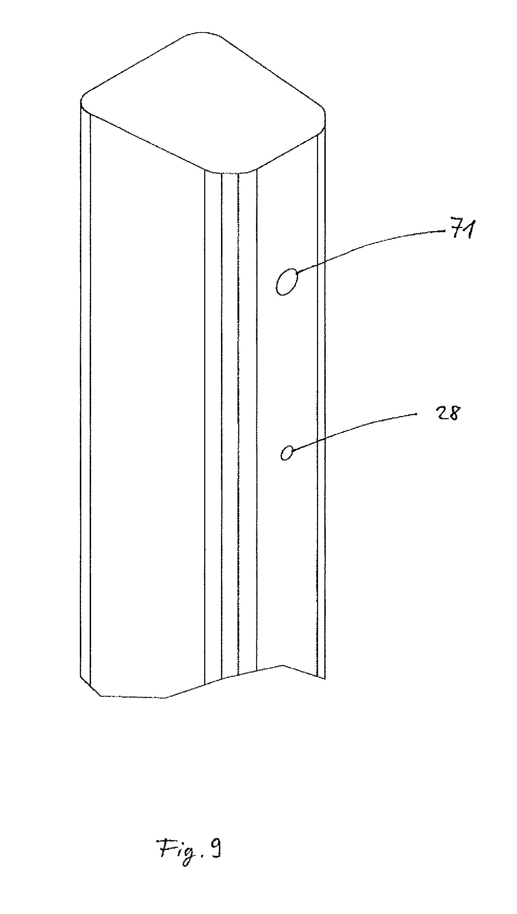

In Fig. 1 sind neben den Spannseilen für die Längsverspannung 15 und die Querverspannung 17 weitere Drähte oder Seile in Längsrichtung gezogen. Es handelt sich dabei um zwei Firstseitenseile 19 und 21, welche entlang einer Kulturpflanzungsreihe von Firstbügel 23 zu Firstbügel 23' verlaufen und vorzugsweise an den Enden der Firstbügel eingehängt oder eingezogen sind. Im Weiteren sind ein Firstseil 25, welches vorteilhafterweise zentral über den Firstbügel verläuft, und ein Folienseil 27, welches durch ein Loch 28 (durchgehendes Loch) im jeweiligen Pfeiler 11 von Pfeiler zu Pfeiler geführt ist (Fig. 9). Im Folgenden wird insbesondere der Begriff Seil verwendet, welcher - insofern nichts anderes erwähnt ist - mit dem Begriff Draht austauschbar ist. In Querrichtung sind optional von den Pfeilern 11 in einem Winkel abfallend abstehende Folienarme 29 vorzugsweise miteinander verbunden.

Das Stützgerüst der Witterungsschutzvorrichtung, bestehend zumindest aus Pfeilern 11,11',11", distal aufgesetzten Befestigungselementen 13,13',13" und Spannseilen in Längs- und Querrichtung 15 und 17, ist ausgelegt, ein Schutznetz zu tragen, welches auf den Spannseilen der Längs- und Querverspannung auf liegt. Lediglich das Firstseil 25 kann über dem Netz an den Befestigungselementen eingehängt werden und sichert dabei vorteilhafterweise das Netz nach oben hin.

Als Support werden vorzugsweise Pfeiler, insbesondere Betonpfeiler verwendet. Die Betonpfeiler können im Arbeitsbereich (d.h. insbesondere im unteren Bereich) Löcher zur Aufnahme von Drähten für ein Drahtgerüst (Baumgerüst) für die Pflanzenkultur enthalten. Ansonsten müsste das Baumgerüst umständlich mit Zusatzteilen befestigt werden.

Die optionalen Folienarme 29 und 31 zusammen mit dem Foliensezl 27 sind ausgelegt, in Querrichtung einrollbare Schutzfolien zu tragen. Ist eine solche Schutzfolie entlang der Folienarme bis zum Pfeiler hin aufgerollt, kann sie vorteilhafterweise unter einer Deckfolie Platz finden. Eine solche Deckfolie ist zweckmässigerweise über dem Firstbügel und zwischen den zwei Firstseitenseilen, welche den Firstbügeln einer Längsreihe angehören, aufspannbar.

Die einrollbare Schutzfolie wird vorteilhafterweise an Pfeiler und/oder Folienseil befestigt und kann gestützt von den Folienarmen entlang der Folienarme in Querrichtung ausgerollt werden. Gemäss einer bevorzugten Ausführung kann das ausrollbare Folienende an einem Stab zum Aufrollen oder in einem Rollkasten befestigt sein, sodass beim Auf- oder Abrollen, der Stab durch Drehung um seine Achse bzw. der Rollkasten beim einziehen der Folie sich zusammen mit der einrollenden Folie über die Folienarme bis nahe zu Pfeiler und Folienseil unter den Firstbügel hoch bewegt.

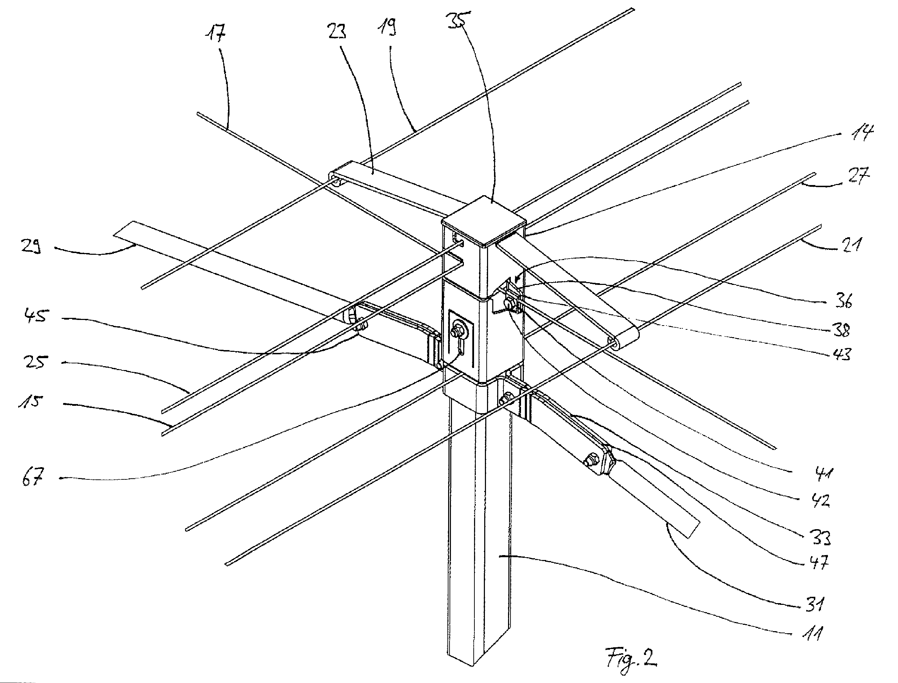

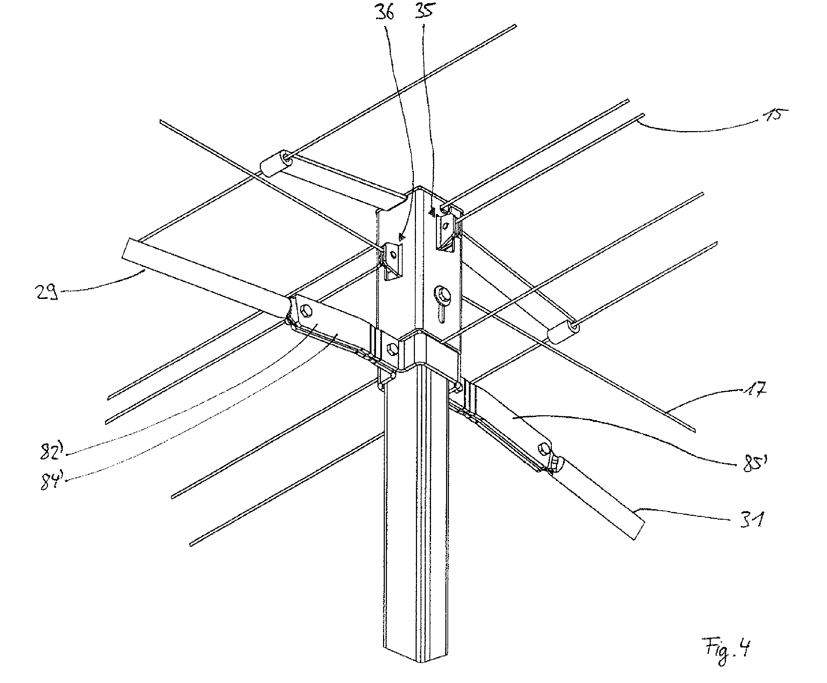

Fig. 2, 3 und 4 zeigen verschiedene Ansichten eines Pfeilers 11 der Witterungsschutzvorrichtung mit Befestigungselement 13 (welches hier als längliches eine Längsachse aufweisendes Montageteil 14 ausgeführt ist), zwei Spannseilen als Längs- und Querverspannung 15 und 17, einem Firstseil 25, einem Folienseil 27, einem Firstbügel 23, zwei Firstseitenseilen 19 und 21, einem ersten Folienarme 29 und einem zweiten Folienarm 31, einer Folienarmhalterung 33 zum Befestigen der beiden Folienarme am Pfeiler 11, und einem optionaler Deckel 34, welcher das Befestigungselement 13 abschliesst, z.B. um das Eindringen von Wasser und Verschmutzung zu vermindern. Die Längsachse eines Montageteils 14 erstreckt sich in Längsrichtung eines Pfeilers 11 und ist somit in der Regel zusammen mit dem Pfeiler ungefähr orthogonal zu Längs- und Quer verspannung 15 und 17 ausgerichtet. Im Weiteren sind eine erste Klemmeinrichtung 35 zum Fixieren der Längsverspannung 15 und eine zweite Klemmeinrichtung 36 zum Fixieren der Querverspannung 17 am Befestigungselement 13 ausgebildet.

Die beiden Klemmeinrichtungen sind in vertikaler Richtung gegeneinander beabstandet. Jede der Klemmeinrichtungen 35 und 36 umfasst vorzugsweise zwei relativ zueinander verstellbare Klemmbacken 38, 41 (in Fig. 2 gezeigt die erste und zweite Klemmbacke 38, 41 der zweiten Klemmeinrichtung) mit Klemmflächen, wobei die Klemmbacken vorzugsweise mittels einer Schraubverbindung 42 miteinander verbind- und feststellbar sind. Die zweite Klemmbacke 41 ist hier beispielhaft als Klemmleiste ausgeführt, welche bei angezogener Schraubverbindung (Klemmschraube 42) pressend auf die erste Klemmbacke 38 einwirkt. Vorzugsweise ist eine der Klemmflächen mit einer Seilaufnahme ausgestattet, welche es erlaubt das jeweilige Spannseil einzufassen und zu klemmen, d.h. insbesondere längsseitig zu klemmen. Die Seilaufnahme 43 welche hier beispielhaft zwischen zweie Rippen oder zweie Greifbögen auf der Klemmfläche der Klemmleiste 41 ausgebildet ist, soll insbesondere ein seitliches Ausrutschen des Spannseils aus der Klemmeinrichtung verhindern. Eine an mindestens einem Rand, bevorzugt an zwei gegenüberliegenden seiner Rändern eingebogene Klemmleiste 41 kann z.B. mittels Klemmschraube 42 und entsprechenden Löchern in den Klemmbacken 37, 38 und 41 zum Fixieren der Spannseile 15, 17 verwendet werden.

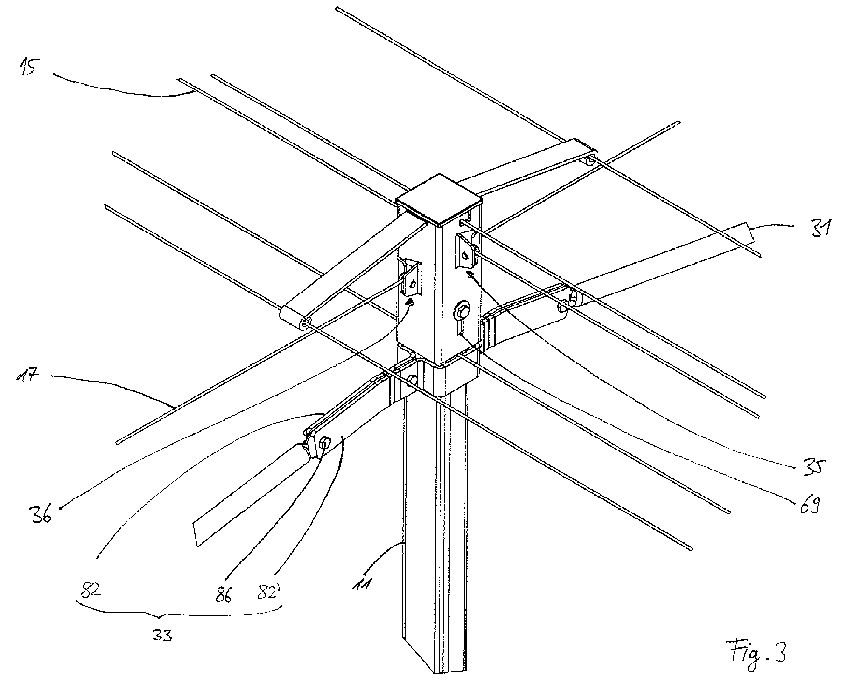

Die hier gezeigte Ausführung einer Folienarmhalterung 33 besteht z.B. aus zwei gleichen Teilen (siehe auch Bezugsziffern 82, 82' der Fig. 3), welche zusammen verschraubt um den Pfeiler 11 schliessend klemmen und an zwei entgegengesetzt distalen Enden je eine Aufnahme 45 und 47 für einen Folienarm bieten. Die Folienarme 29 und 31 sind mit den distalen Enden der Folienarmhalterung gelenkig und vorzugsweise lösbar verbunden, sodass die Neigung der Folienarme nach Bedarf ein- und umgestellt werden kann. Die Aufnahme für einen Folienarm ist zweckmässigerweise mit einer Klemmschraube ausgestattet. Der Folienarm 29 oder 31 ist zweckmässigerweise an einem Ende mit einem Durchgangsloch versehen und gegebenenfalls um abgeflacht um von der Klemmschraube der Aufnahme 45 oder 47 einfach fixiert werden zu können.

Die hier gezeigte Folienarmhalterung 33 kann unabhängig vom Befestigungselement 13 angebracht werden. Alternativ könnten distale Folienarmhalterungsenden mit oben genannten Aufnahmen 45, 47 für je einen Folienarm 29, 31 gegebenenfalls am Befestigungselement 13 angebracht bzw. in diesem integral vorhanden sein.

Ein Firstbügel 23 kann vorzugsweise auf dem oberen Ende des Befestigungselements 13 derart angebracht werden, dass er Längs- und Querverspannung 15 und 17 überragt sowie gegebenenfalls eine Folienarmhalterung 33, welche zusätzlich unterhalb der Längs- und Querverspannung 15 und 17 angebracht sein kann.

Eine auf Firstbügel 23 und erstem und zweitem Firstseitenseil 19 und 21 angebrachte Deckfolie kann ein eingerolltes Netz und/oder eingerollte Schutzfolie, insofern diese bis unter die Deckfolie eingerollt sind, vor unnötigem Einwirken der Umwelteinflüsse wie Sonneneinstrahlung, Wind und Nässe schützen. Damit das genannte Einrollen möglich ist, sollten die vertikalen Abstände zwischen Folienarmhalterung 33, insbesondere dessen abstehenden Armen, und der darüber liegenden Querverspannung oder zwischen der Querverspannung und dem Firstbogenentsprechend gross sein, d.h. zumindest so gross wie der Rollendurchmesser der aufgerollten Schutzfolie oder des aufgerollten Netzes.

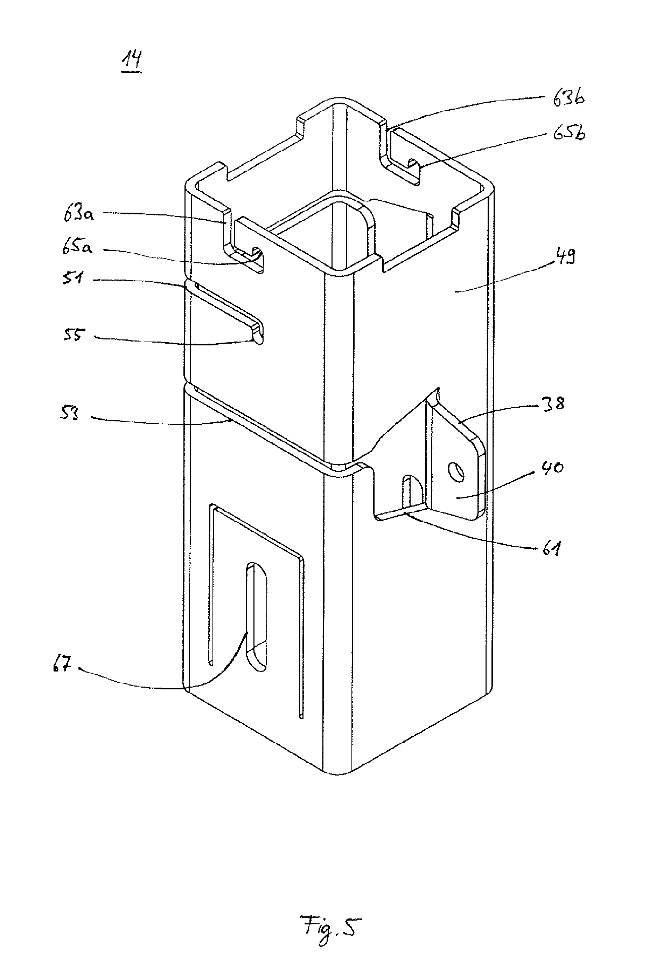

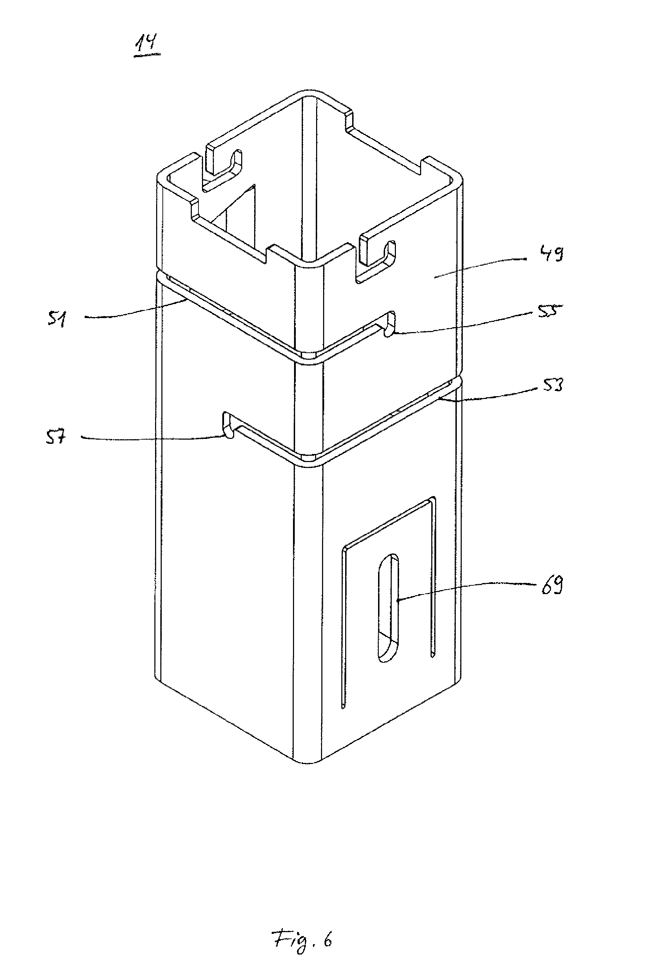

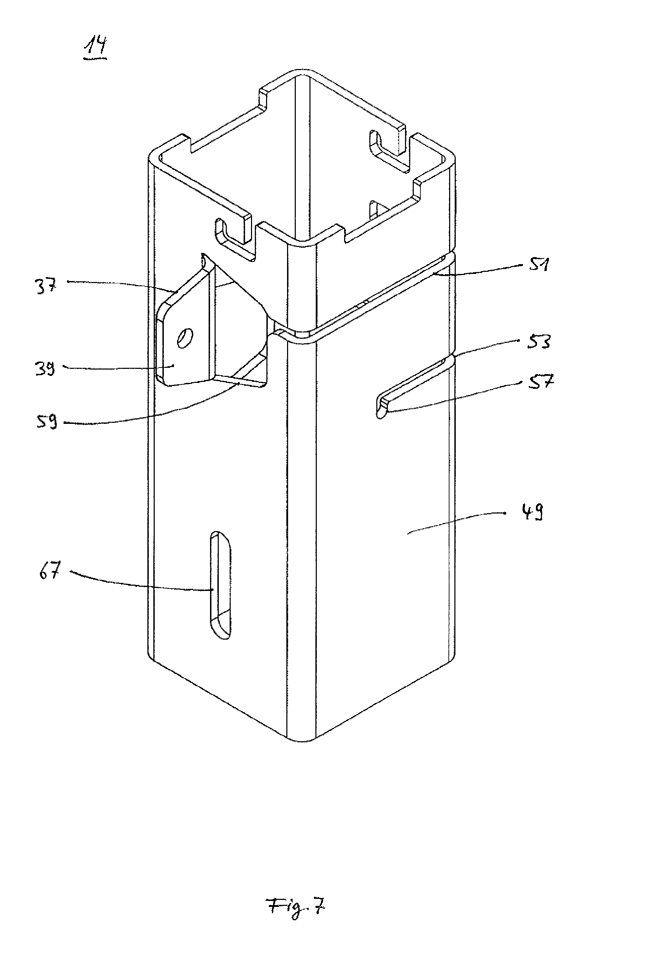

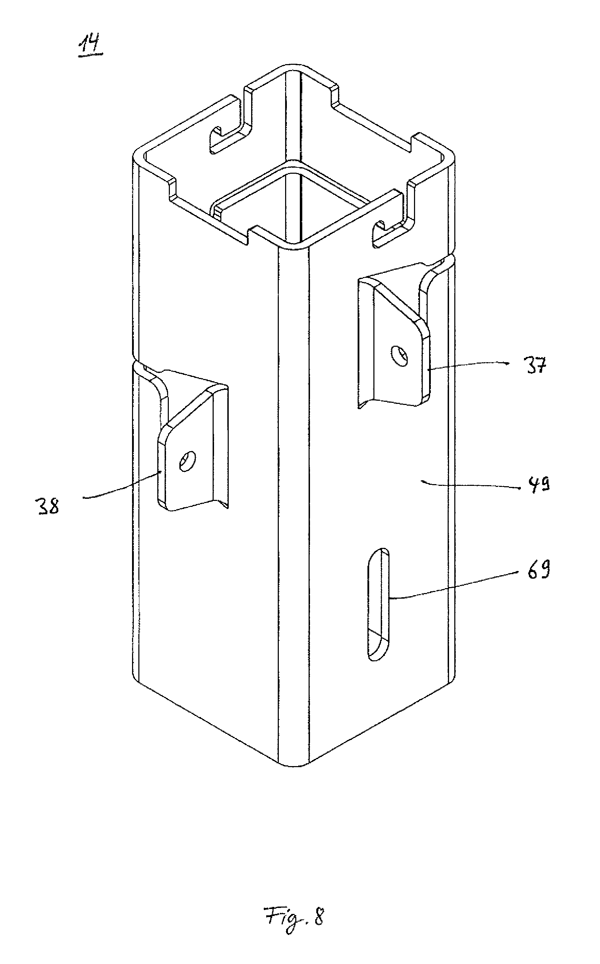

Das Befestigungselement 13 ist vorzugsweise als Aufsatzkappe ausgeführt und kann dadurch einem Pfeiler 11 aufgesetzt werden. Insbesondere ist das Befestigungselement 13 aus einem zumindest nach unten offenen Hohlprofil gefertigt. Das Hohlprofil kann einen runden, insbesondere kreisrunden oder ovalen, oder bevorzugt rechteckigen, insbesondere quadratischen, Querschnitt besitzen. Fig. 5, 6, 7 und 8 zeigen ein erfindungsgemässes Befestigungselement 13 der Witterungsschutzvorrichtung in vier Ansichten. Das hier dargestellte bevorzugte Befestigungselement 13 gefertigt aus einem Hohlprofil beinhaltet insbesondere eine zylinderartige Mantelwandung 49, einen ersten seitlichen Schlitz 51 durch die Mantelwandung zum Einlegen eines ersten Spannseils 15 (i.e, einer ersten Verspannung, insbesondere in Längsrichtung) auf einem ersten Querschnittniveau, einen zweiten seitlichen Schlitz 53 durch die Mantelwandung zum Einlegen eines zweiten Spannseils 17 (i.e. einer zweiten Verspannung, insbesondere in Querrichtung) auf einem zweiten Querschnittniveau. Die beiden Schlitze sind zweckmässigerweise derart in einem Winkel um die Longitudinale des Hohlprofils gegeneinander verdreht und voneinander beabstandet, dass das erste und das zweite Spannseil einander im Innern (d.h. im Hohlvolumen) des Hohlprofils vertikal (d.h. in Achsrichtung des Hohlprofils) beabstandet kreuzen können. Die Spannseile kreuzen sich in Bezug auf eine Projektionsebene normal zur Längsachse des Hohlprofils (d.h. praktisch normal zur Vertikalen) bevorzugt in einem Winkel zwischen 80° und 100°, weiter bevorzugt in einem Winkel von ca. 90°.

Im Weiteren beinhaltet das hier dargestellte und bevorzugte Befestigungselement 13 gepaart mit dem ersten Schlitz 51 eine erste Klemmeinrichtung 35 zum Fixieren des ersten Spannseils 15 und gepaart mit dem zweiten Schlitz 53 eine zweite Klemmeinrichtung 36 zum Fixieren des zweiten Spannseils 17. Gemäss einer bevorzugten Ausführungsform wird die Klemmfläche 39, 40 der ersten Klemmbacke 37, 38 der ersten und/oder der zweiten Klemmeinrichtung 35, 36 durch je eine aus dem Hohlprofil ausgebogene Lasche gebildet.

Jeder der beiden Schlitze ist vorteilhafterweise mit einer Hinterschneidung 55 und 57 ausgeführt. Die Hinterschneidung dient insbesondere dazu zu verhindern, dass das Spannseil sofort wieder aus dem Schlitz springt. Im Hohlprofil der bevorzugten Ausführung erscheint die Hinterschneidung lediglich am Schlitzende.

In einer weiter bevorzugten Ausführungsform mündet der erste und der zweite Schlitz 51 und 53 jeweils an einem Schlitzende anstatt in die genannte Hinterschneidung 55 bzw. 57 vielmehr in eine erste bzw. eine zweite Aussparung 59, 61 der Mantelfläche, welche insbesondere von der oben genannten ausgebogenen Lasche stammt. Ein in ein Befestigungselement gemäss dieser Ausführungsform einzuspannendes Spannseil 15 bzw. 17 wird vorteilhafterweise über den Schlitz 51 bzw. 53 eingelegt, verhakt idealerweise am einen Ende des Schlitzes 51 bzw. 53 in der Hinterschneidung 55 bzw. 57 und kann am anderen Ende des Schlitzes am entsprechenden Klemmelement 35 bzw. 36 fixiert werden. Im eingespannten Zustand läuft das Spannseil 15 bzw. 17 zentral durch das Befestigungselement 13, wobei die Stellen des Durchtritt durch die Hohlprofilwand zweckmässigerweise zum einen die Hinterschneidung 55, bzw. 57 und zum andern die Aussparung 59, bzw. 61 sind.

Ein eingespanntes Netz kann durch das Firstseil 25 fixiert werden, indem das Netz über das Befestigungselement gestülpt wird, bevor das Firstseil in Bezug auf das Netz begrenzend angebracht wird. Gegebenenfalls kann (auch) der Firstbügel 23 durch das Firstseil 25 fixiert werden, indem der Firstbügel auf das Befestigungselement gelegt durch das Firstseil klemmend fixiert wird. Vorzugsweise wird das Firstseil zum Klemmen in einen dritten Schlitz 63 mit Hinterschneidung 65 eingelegt, wobei der dritte Schlitz 63, wenn er vom Profilende (d.h. vom Mantelwandrand des Befestigungselements) her eingeschnitten ist, als Schlitzpaar 63a, 63b ggf. mit entsprechender Hinterschneidung 65a, 65b ausgebildet ist.

Zum Zweck der Befestigung des Hohlprofils am Pfeiler kann vorzugsweise unterhalb der Schlitze 51, 53 und beabstandet davon zumindest eine Durchgangsbohrung im Hohlzylinder angebracht sein (d.h. eine Durchgangsbohrung in einem Zylinder bedeutet insbesondere zwei durchgehende Bohrlöcher 67 und 69 an zwei einander gegenüberliegenden Zylindermantelbereichen). Eine feste Verbindung zwischen Befestigungselement 13 und Pfeiler 11 kann durch Verschrauben erreicht werden. Hierfür ist es zweckmässig, dass der Pfeiler eine Bohrung 71, vorzugsweise eine Durchgangsbohrung, nahe dem oberen Pfeilerende aufweist, um das Befestigungselement mit dem Pfeiler lösbar zu verbinden (Fig. 9). Das Befestigungselement weist der Pfeilerkonstruktion angepasst eine Bohrung, vorzugsweise eine Durchgangsbohrung auf. Im Weiteren kann ein Wandbereich um zumindest eine der einander gegenüberliegenden Bohrungen im Hohlprofil laschenartig abgetrennt sein, wodurch anstatt einer einfachen Verschraubung eine Klemmverschraubung zwischen Pfeiler und Befestigungselement ermöglich wird und somit ein fester Sitz des Befestigungselements erreicht wird.

Sind die Bohrungen 67, 69 im Befestigungselement z.B. als vertikale Langlöcher ausgeführt, dann ist das Befestigungselement gegenüber dem Pfeiler in vertikaler Richtung vorteilhafterweise höhenverstellbar. Vertikale Langlöcher sind insbesondere Langlöcher, welche vorzugsweise in Richtung der Longitudinale des Hohlprofils ausgerichtet sind.

Fig. 9 zeigt ein Pfeiler der Witterungsschutzvorrichtung. Der Pfeiler hat vorzugsweise 2 Durchgangslöcher nahe seinem oberen Ende. Das obere Loch 71 dient vorzugsweise zur Befestigung eines erfindungsgemässen Befestigungselements 13. Das untere Loch 28 dient vorzugsweise der Anbringung des Folienseils, welches insbesondere als Träger für eine Schutzfolie Verwendung findet.

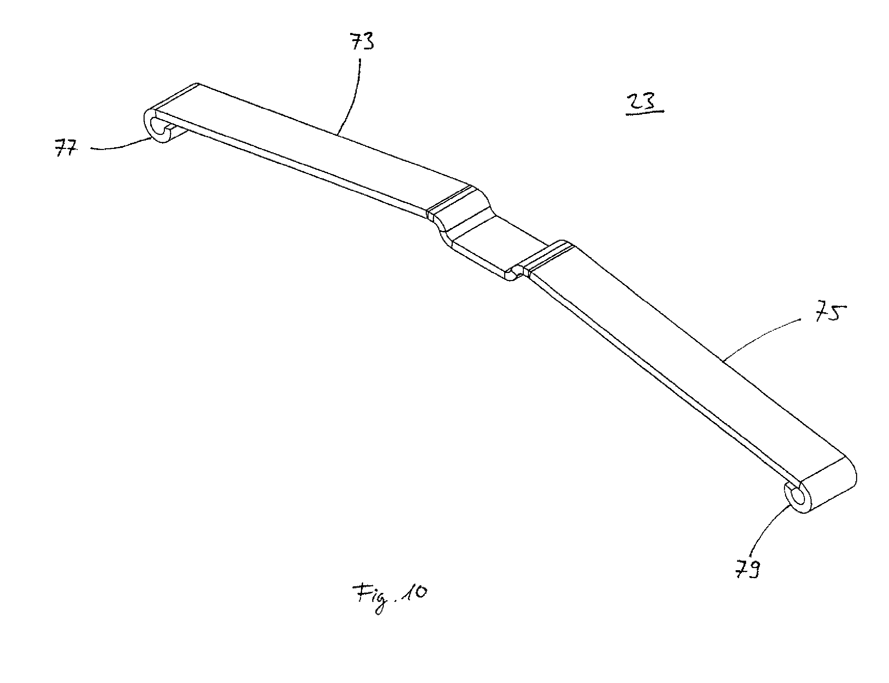

Fig. 10 zeigt einen Firstbügel 23 zur optionalen Bestückung von Befestigungselementen. Der Firstbügel ist gewinkelt ausgeführt, mit leicht hängenden Armen 73 und 75. An den Armen 73 und 75 sind Aufnahmen 77 und 79 für die Firstseitenseile ausgebildet. In einer beispielhaften Ausführungsform sind die Aufnahmen 77 und 79 für Firstseitenseile eingerollte Bügelenden. In einer bevorzugten Ausführungsform ist der Firstbügel 23 mittig mit einer Einbuchtung 81 ausgeführt, welche insbesondere derart ausgebildet ist, dass sie am oberen Ende des als Hohlkörper ausgebildeten Befestigungselements 13 einpasst und mit dem Firstseil 25 fixiert werden kann.

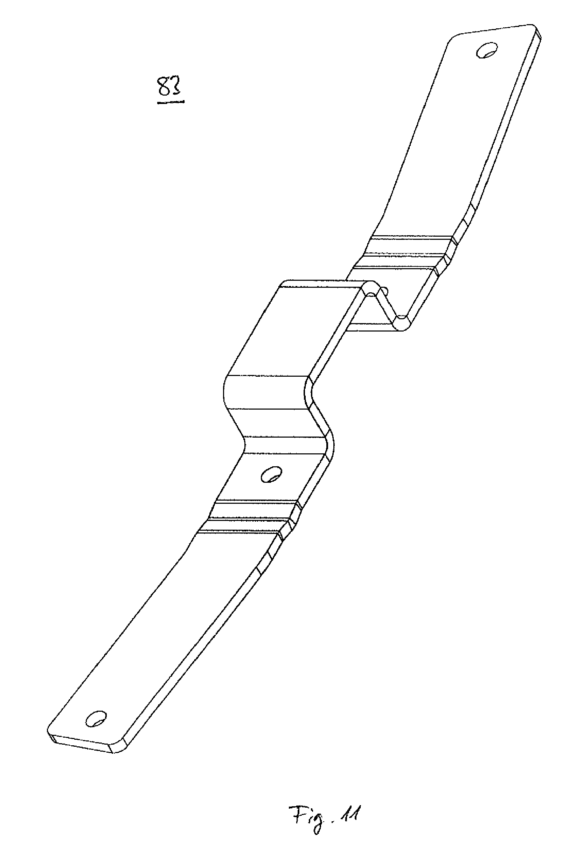

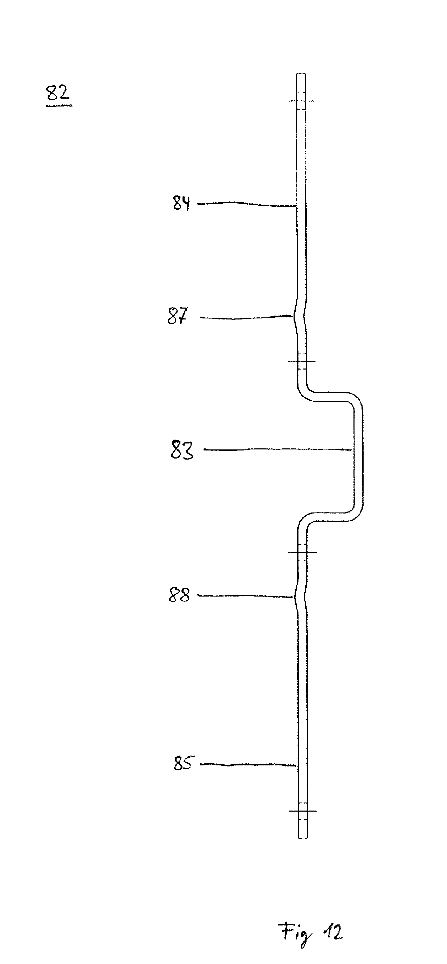

Die Fig. 11 und 12 zeigen ein Klammerteil 82 einer Folienarmhalterung 33 der Witterungsschutzvorrichtung. Eine Folienarmhalterung 33 besteht insbesondere aus zwei spiegelbildlichen, vorzugsweise zwei gleichen, Klammerteilen 82 und 82' (Fig. 2 bis 4). Ein Klammerteil 82 kann z.B. als Flachstab mit mittiger Aufnahmeausbuchtung 83 und von der Aufnahmeausbuchtung 83 abstehenden zwei Armen 84 bzw. 85 gestaltet sein. Zwei Klammerteile 82 und 82' eignen sich zusammen zum kraftschlüssigen Umklemmen eines Pfeilers 11, indem die zwei Klammerteile den Pfeiler per Aufnahmeausbuchtung 83 je zu ungefähr der Hälfte umfassen und die Klammerteile miteinander und gegen den Pfeiler verklemmt werden. Zum Beispiel eine Verschraubung links und rechts, nahe dem umklammerten Pfeiler 11 dient der Verklemmung der Folienarmhalterung am Pfeiler 11. Entsprechende Bohrlöcher sind in den Armen 84, 85 ausbuchtungsseitig vorgesehen. Weiter formen die Klammerteile 82, 82' in ihrer klemmenden Anordnung als Folienarmhalterung 33 zwei Arme, welche vorteilhafterweise gegeneinander abgewinkelt sind. Die Arme 84, 84' oder 85, 85' zweier Klammerteile 82 und 82' können, wenn gegeneinander gepresst, vorzugsweise Aufnahmen 45, 47 für je einen Folienarm formen. Wie aus den Fig. 2-4 hervorgeht, können diese Aufnahmen 45, 47 aus einem Spalt bestehen, welcher beim gegeneinanderpressen der Arme 84, 84' oder 85, 85' der zwei Klammerteile 82, 82' entsteht, wobei die Arme 84, 85 hierzu z.B. je einen auf einen Arm 84', 85' des anderen Klammerteils 82' treffenden Abstandshöcker 87, 88 aufweisen, siehe Fig. 12. Schrauben 86 in armendständigen Bohrlöchern oder andere zweckmässige Befestigungsmittel dienen insbesondere dafür je zwei Arme 84 und 84' bzw. 85 und 85' der Klammerteile 82, 82' mit je einem Ende eines Folienarms 29 oder 31 zu verbinden. Die Abstandshöcker 87, 88 sind am Arm 85, 85' vorzugsweise zwischen dem ausbuchtungsseitigen Bohrloch, welches zur Verklemmung an einem Pfeiler dient, und dem armendständigen Bohrloch, welches dem Halten eines Folienarms dient, angelegt. Dabei ragen die Abstandshöcker 87, 88 zweckmässigerweise aus jener Seite des Klammerteils 82, welche die Vertiefung in die Aufnahmeausbuchtung 83 aufweist. Andere Ausführungen eines Klammerteils sind denkbar, welche die hier verdeutlichten Funktionalitäten beinhalten.

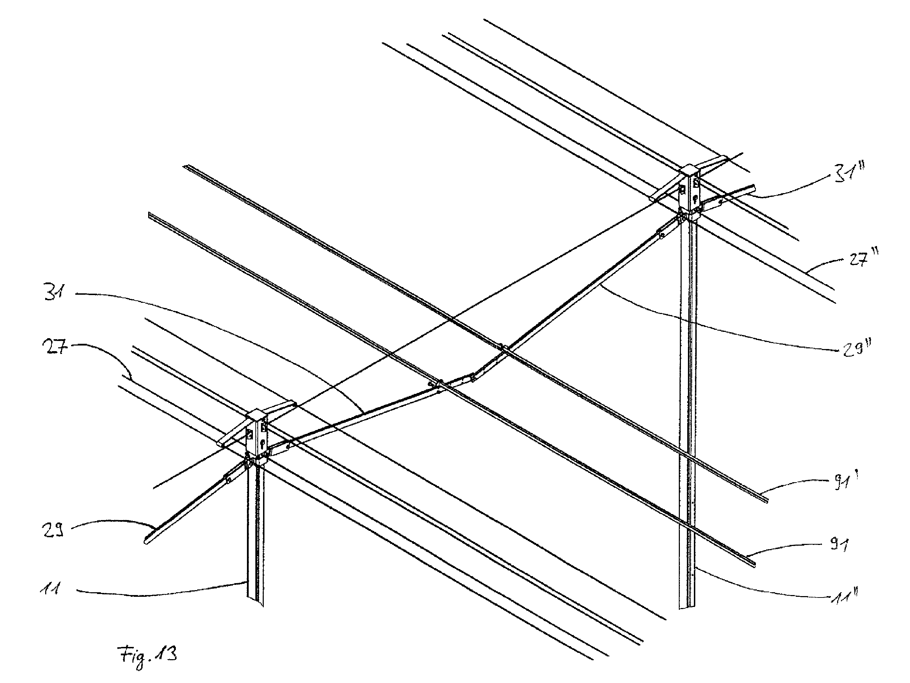

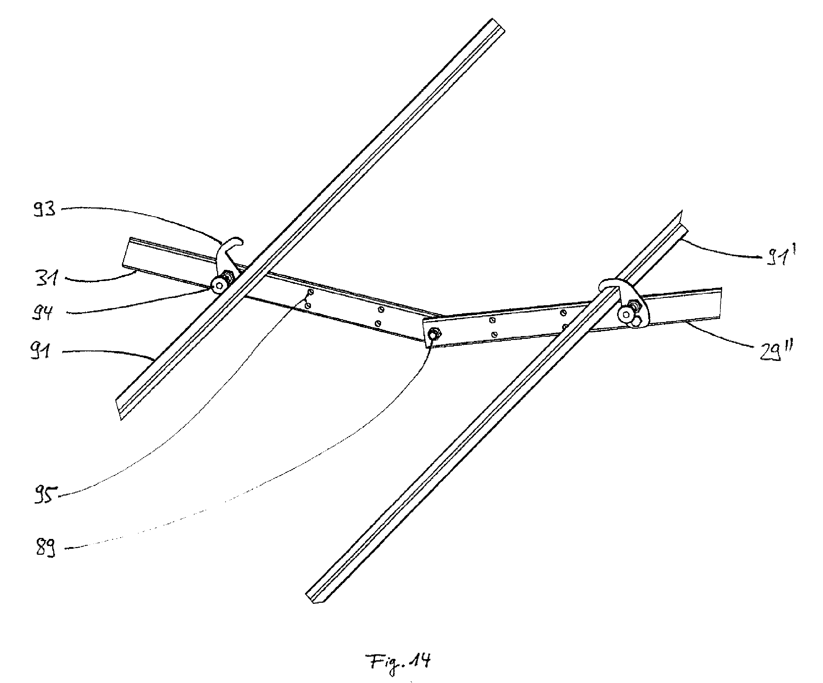

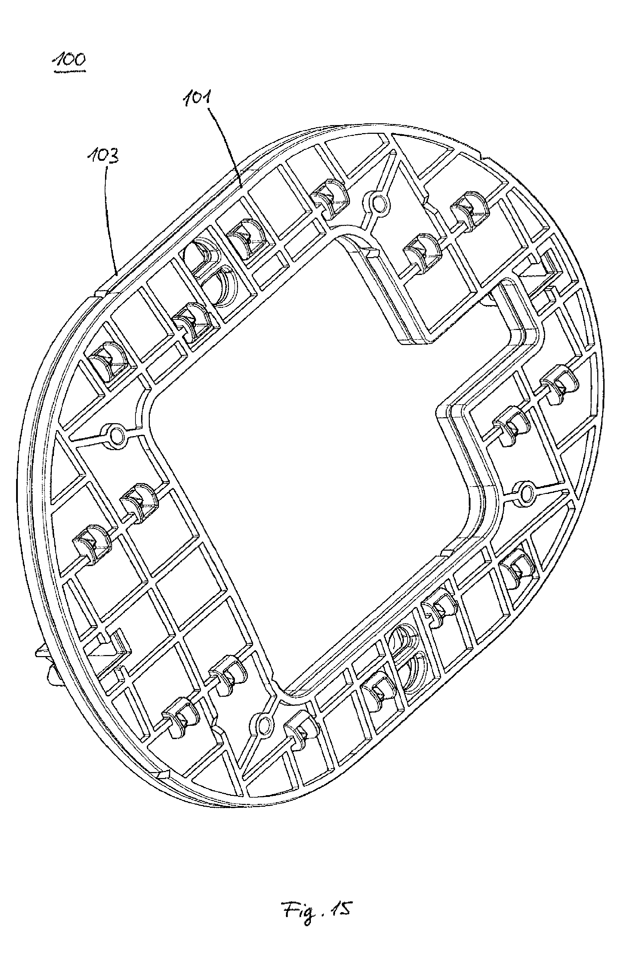

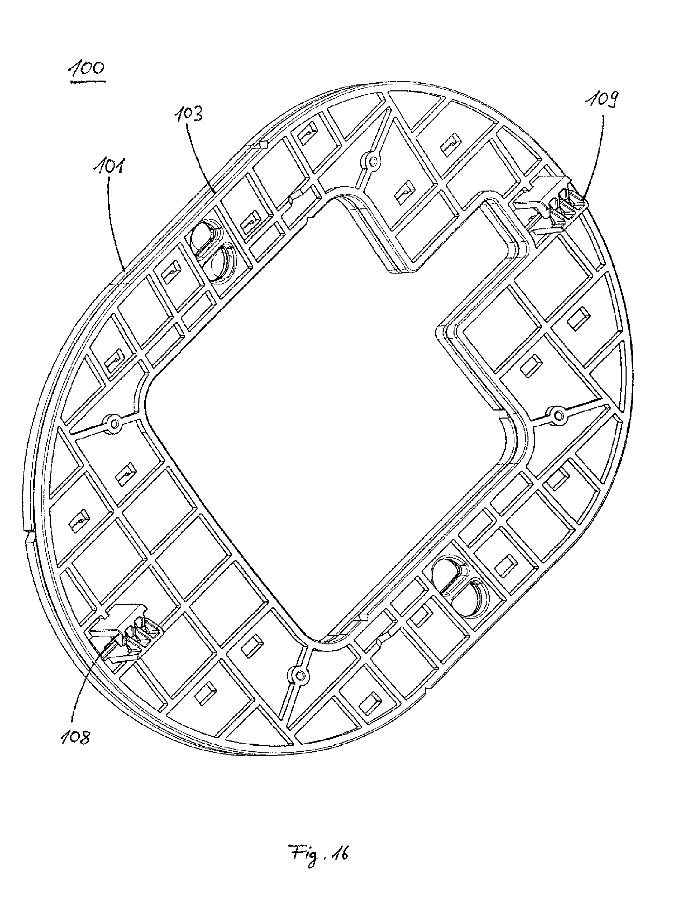

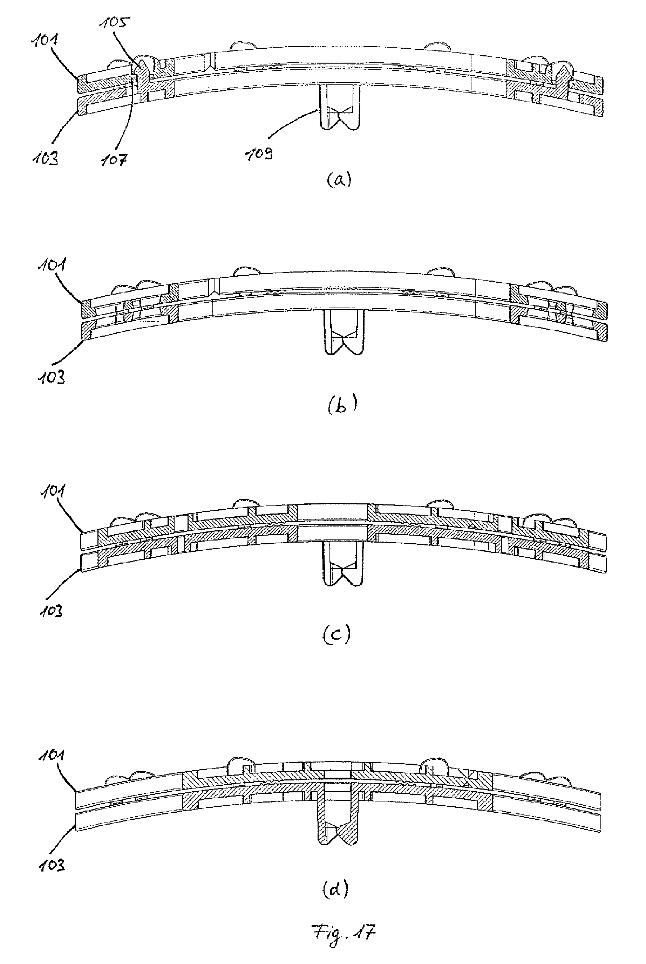

Fig. 13 zeigt eine Teilansicht der Witterungsschutzvorrichtung mit Folienarmverbindung 89 zur benachbarten Kulturpflanzungsreihe. Fig. 14 zeigt eine Detailansicht der Folienarmverbindung. Die Folienarmenden sind vorzugsweise mit zumindest einem Bohrloch ausgestattet, welches ein Verbinden, z.B. durch Verschrauben, von Folienarmen benachbarter Reihen erlaubt. Dadurch wird die Stabilität der Folienabdeckung erhöht. Gleichzeitig bleibt eine einfache Lösung der Verbindung bei Bedarf möglich. Folienbahnen (in Fig. 13 nicht gezeigt), welche an deren erstem längsseitigen Rand an den Folienseilen 27, 27" (z.B. per Schleife oder Haken) und den Pfeilern 11,11" (vorzugsweise per Montageplakette wie weiter unten erklärt) befestigt sind, liegen zweckmässigerweise auf den Folienarmen 31, 29" auf und können entlang dieser aufgerollt oder aufgezogen bzw. abgerollt oder ausgezogen werden. Die Folienbahnen sind vorzugsweise an ihrem zweiten längsseitigen Rand mit einer Lasche zum Einzug einer Folienprofilstange 91, 91' ausgerüstet. Alternativ zur Folienprofilstange kann auch ein Rohr oder eine Stange verwendet werden. Eine Rastvorrichtung mit Rasthaken 93 und Rastbozen 94 ermöglicht eine lösbare Fixierung der Folienprofilstange 91 bzw. 91'und somit der Folienbahn an den Folienarmen 31 bzw. 29". Die Rastvorrichtung kann bei entsprechend vorhandenen Mitteln, (wie z.B. in Fig. 14 gezeigten, vorgesetzten Bohrlochpaaren 95) individuell angepasst auf den Folienarmen 31, bzw. 29"montiert werden. Die Länge der Folienprofilstange 91 bzw. 91' entspricht vorzugsweise der Länge einer Kulturpflanzungsreihe. Fig. 15 und 16 zeigen eine erfindungsgemässe Montageplakette 100. Eine Montageplakette dient insbesondere dazu ein Schutznetz oder eine Schutzfolie an einer Stützstruktur eines Witterungsschutzes anzubringen. Die Montageplakette 100 beinhalte vorzugsweise zumindest zwei zusammensteckbare Platten, d.h. eine erste, obere Platte 101 und eine zweite, untere Platte 103 zum sandwichartigen verklemmen eines Netzes zwischen den beiden Platten. Beide Platten weisen zur Verstärkung und Materialersparnis Verstrebungen auf. Fig. 17 zeigt vier Querschnitte durch die zusammengesteckte Montageplakette an vier Querschnittstellen (a), (b), (c) und (d). Die beiden Platten weisen miteinander verhakende Elemente auf, insbesondere die untere Platte 103 Haken 105 und die obere Platte 101 Hakengegenstücke 107 zum Einrasten der Haken 105, was zum gegenseitigen Verklemmen der Platten bei gleichzeitig sandwichartigem Fassen eines Gewebes oder Netzes dient. Eine umgekehrte oder eine gemischte Anordnung von Haken und Hakengegenstücken sind ebenfalls denkbar.

Beide Platten 101, 103 sind vorteilhaft als Ringteile mit Ringflächen (102, 104) ausgeführt mit mittiger Öffnung zum Aufstecken auf einen Pfeiler, vorzugsweise auf ein allgemeines Befestigungselement und weiter bevorzugt auf ein Befestigungselement 13, wie es oben beschrieben ist. Eine optionale Aussparung innerhalb der Öffnung bietet Platz für die Klemmeinrichtung 35, sodass die Montageplakette z.B. ohne Störung durch die Klemmeinrichtung flach auf dem Spannseil der Längsverspannung liegen kann. Die Montageplakette hat zudem aufgrund der Übergrösse der mittigen Öffnung gegenüber dem Querschnitt des Befestigungselements vorzugsweise ein gewisses Spiel zum Befestigungselement 13, sodass leichter Zug an Netz oder Folie durch Nachrutschen der Montageplakette ausgeglichen werden kann. Die Montageplakette, wenn Sie zur Befestigung eines Schutznetzes dient liegt vorzugsweise zwischen dem Spannseil der Längsverspannung und dem Firstseil und wird somit durch diese beiden Seile am Ort gehalten.

Die Montageplakette besitzt zweckmässigerweise Greifer 108 und 109, welche zur Befestigung auf einem Seil, insbesondere den Seilen der Längsverspannung 15, 15", dienen oder den Folienseilen 27. Vorteilhafterweise ist die Montageplakette gekrümmt ausgeführt, sodass die Krümmung der Montageplakette ähnlich einem hängenden Gewebe, wie z.B. dem vom Spannseil der Längsverspannung abfallenden Schutznetz oder der vom Folienseil nach links und rechts abfallenden Schutzfolie, ausgebildet bzw. dessen oder deren Abfallwinkel nachgebildet ist. Vorzugsweise ist demnach die Montageplakette um die Position einer die Greifer 108,109 verbindende Achse konkav gekrümmt. Eine derartige Krümmung der Montageplakette hat insbesondere den Vorteil, dass die Spannungen (insbesondere Zugspannungen) am Montageplakettenrand hauptsächlich innerhalb der Netzebene wirken und so beim Netz eine längere Standzeit zur Folge hat.

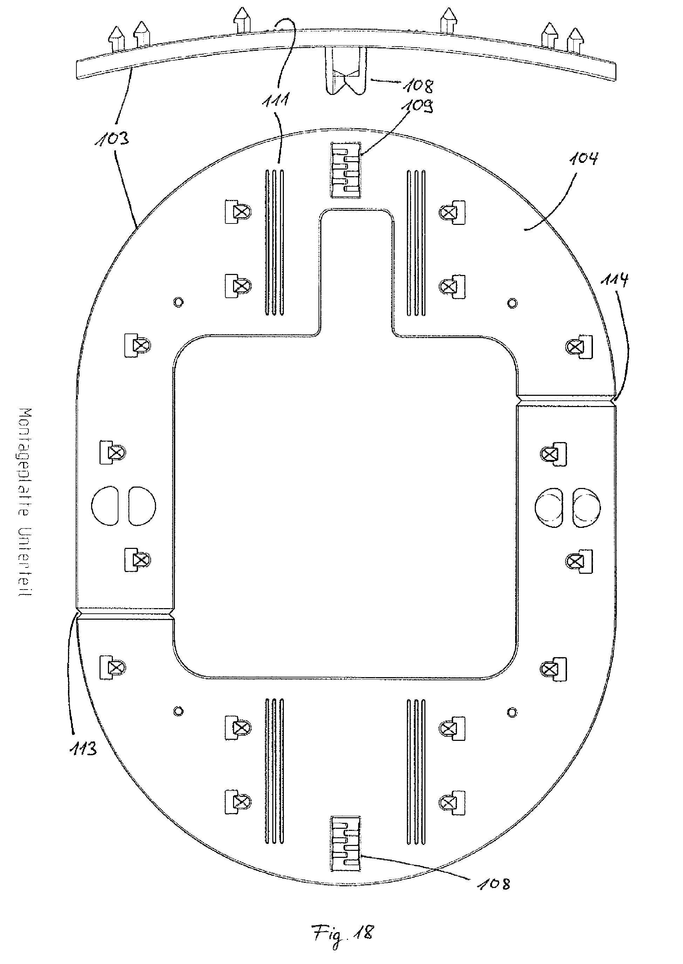

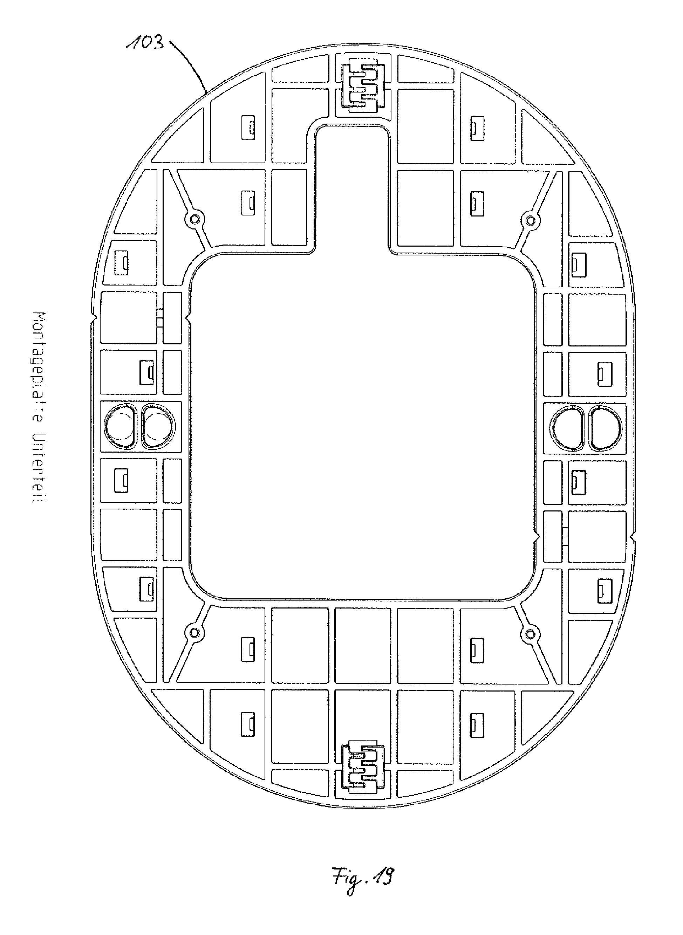

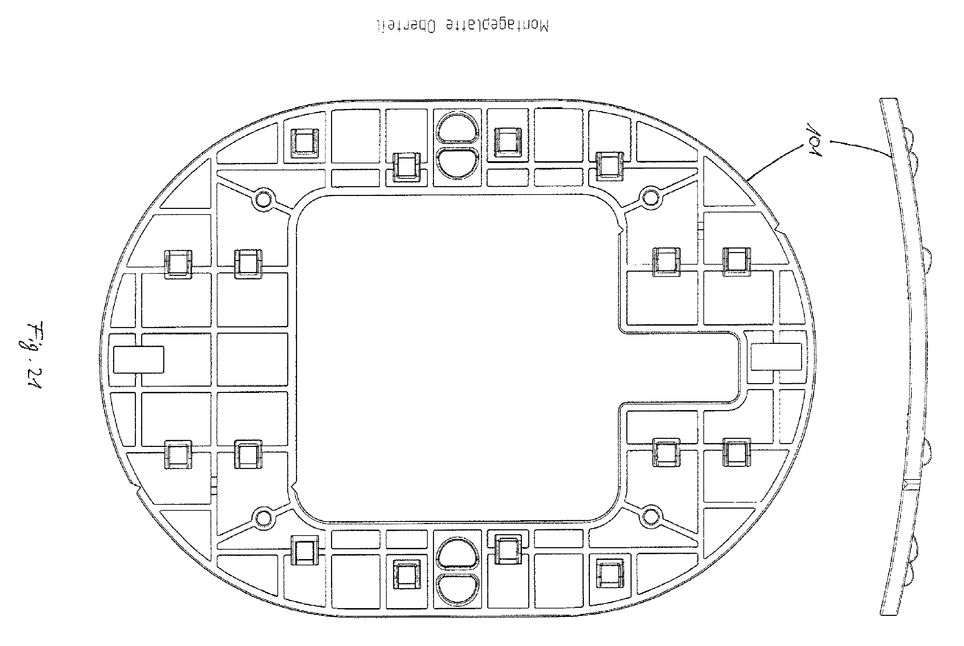

Fig.18, 19, 20 und 21 zeigen Innen- und Aussenansicht der beiden Platten, untere Platte 103 und obere Platte 101, der Montageplakette sowie die jeweilige Seitenansicht. Die Innenseiten der Platten der Montageplakette können Rutschstopperoberflächen 111 aufweisen, um dem Plattenverbund zusätzlichen Zusammenhalt zu geben, insbesondere in Scherrichtung.

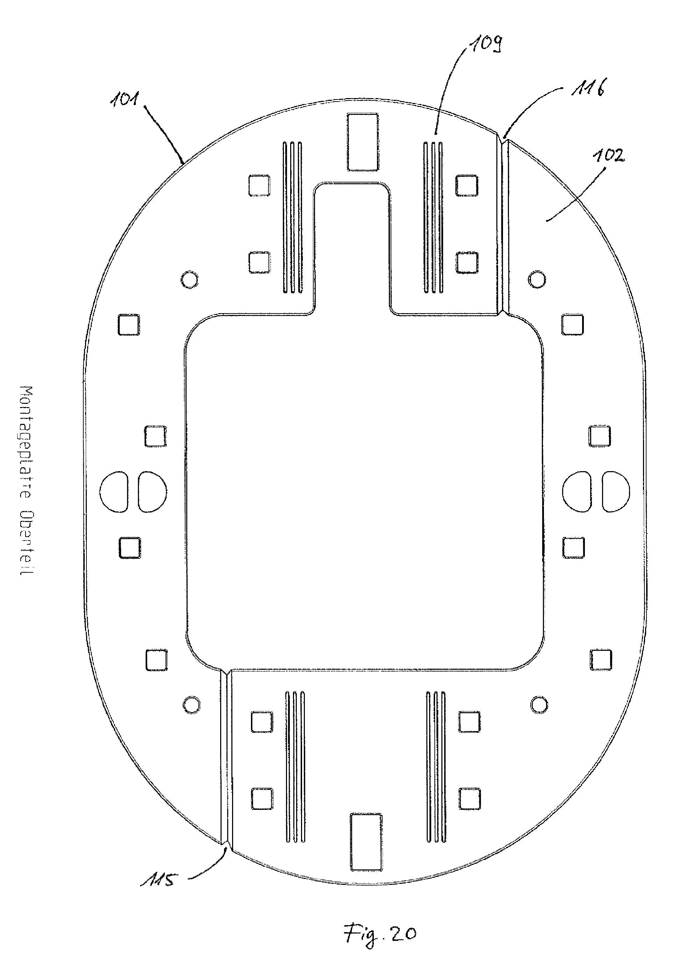

Insbesondere zur Verwendung als Montageplakette für eine Schutzfolie, welche auch nachträglich montiert werden kann, und ganz besonders nachdem das Folienseil und darüber liegende Seile schon montiert wurden, ist die Montageplakette mit Sollbruchstellen ausgeführt. In den Fig. 18 und 20 ist die gegenseitige Anordnung von beispielhaften Sollbruchstellen 113,114,115,116 auf den zwei Platten 101 und 103 besonders gut zu erkennen. Zweckmässigerweise weist jede der Platten 101 und 103 zwei bezüglich ihrer Ringflächenausdehnung diametral einander gegenüberliegende Sollbruchstellen auf, d.h. Sollbruchstellen 113 und 114 auf der unteren Platte 103 und Sollbruchstellen 115 und 116 auf der oberen Platte 101. Die Sollbruchstellen verlaufen vom äusseren Rand des Rings an den inneren Rand des Rings, sodass der Ring in vorzugsweise zwei offene, ggf. bogenartige, Ringabschnitte aufgebrochen werden kann. Zudem sind die Sollbruchstellen auf oberer Platte 101 und unterer Platte 103 an verschiedenen Ringpositionen angeordnet, sodass beim Zusammenfügen der Bruchstücke jedes Bruchstück einer Platte sich mit beiden Bruchstücken der jeweils anderen Platte zusammenfügt und somit verklemmen lässt. Hierdurch wird ermöglicht, dass zwei Schutzfolienbahnen, eine links und eine rechts entlang einer Pfeilerreihe zeitlich nacheinander montiert werden können.

Die erfindungsgemässe Montageplakette zentriert das Netz auf dem Spanndraht 15, das Netz wird dadurch sauber und geschlossen um den Pfeiler 11 montiert, liegt nicht auf dem Befestigungselement 13 oben auf und wir auch nicht durch die Verschraubung auf dem Befestigungselement 13 beschädigt. Eine Schutzfolie kann gegebenenfalls ebenfalls durch die Verwendung der erfindungsgemässen Montageplakette sauber zentriert und geschützt werden. Die erfindungsgemässe Montageplakette eignet sich für verschiedene Anwendungen wo es darum geht Netz, Gewebe, Gewirke oder Folie zu positionieren bzw. aufzuspannen.

Die vorliegende Erfindung bringt eine erhebliche Zeitersparnis bei den Montagearbeiten. Das Einlegen und Befestigen der Spanndrähte ist überraschend einfach.

Indem keine Reibung von Netz und Folie an Gerüstkomponenten und Pfeiler (Betonpfeiler) auftritt, wird einer Beschädigungen von Netz und Folie entgegengewirkt.

Die beiden Systeme Netz (z.B. Hagelschutz) und Folie (z.B. Regenschutz, Sonnenschutz) sind unabhängig voneinander montierbar. Bei einer reinen Hagelschutzanlage kann z.B. bei einem späteren Kulturenwechsel jederzeit der Regenschutz nachgerüstet werden. Zudem ist das Regendach durch die Ausführung mit Folienarm bei Bedarf komplett abklappbar. Trotzdem ist das Foliendach (Regendach) durch Folienarm und Folienarmhalterung in der Querstabilität optimal statisch abgespannt.

Verspannungen bzw. Seile und Drähte sind alle relativ hoch montiert und kompakt im Bereich des Befestigungsmittels. Der Arbeitsbereich näher am Boden hingegen ist frei. Dies reduziert die Verletzungsgefahr des Personals, insbesondere während der Ernte.

Das Netz und die Folie sind durch die Parkposition unter dem Firstbügel optimal gegen UV-Strahlung geschützt, insbesondere auch temperaturverträglich geschützt. In herkömmlichen Systemen wird die Folie zum Schutz vor UV-Strahlung in eine weitere, schwarze Folie eingewickelt und dadurch jedoch extremen Temperaturen ausgesetzt. Ein zeitaufwendiges Umwickeln ist bei Verwendung der erfindungsgemässen Witterungsschutzvorrichtung nicht mehr erforderlich.

Viele Teile können aus Stahl gefertigt werden und sind auch verzinkbar. Dies bedeutet eine längere Lebensdauer.

Nachfolgend wird die Erfindung anhand von Beispielen zur Montage erläutert.

### BEISPIELE:

Im Folgenden wird eine Montage eines Witterungsschutzes bestehend aus einem Hagelschutz (d.h. einer Netzanlage) demonstriert. Die Montage von Stützgerüst und Netz kann bei Bedarf in zwei Schritten erfolgen, d.h. die Montage des Stützgerüstes kann unabhängig von der Montage des Netzes ablaufen und abgeschlossen werden.

### BEISPIEL 1:

Die Montage des Stützgerüstes läuft zweckmässigerweise in folgenden Schritten ab:
- Vermessen des Geländes und Kennzeichnung der Positionen für Pfeiler (hier werden vorzugsweise Betonpfeiler verwendet) und Anker zur Erstellung des Stützgerüstes.. Die Anker dienen zur Abspannung des jeweils ersten, bzw. letzten Pfeilers Längs- und/oder Querrichtung, also des jeweils ersten Pfeilers rings um die Anlage.
- Montagevorbereitung der Betonpfeiler: Die Montage des erfindungsgemässen Befestigungselements (hier als Aufsatzkappe ausgeführt) wird am Boden gemacht bevor die Betonpfeiler ins Erdreich eingebracht werden. Die Aufsatzkappe wird vorerst lose aufgesetzt und in einem späteren Arbeitsschritt fest verschraubt. Dies stellt eine wesentliche Erleichterung im Vergleich zu anderen Systemen dar, bei denen die Montage der Kappen in vier Meter Arbeitshöhe erfolgt. Der Betonpfeiler wird schon vom Hersteller mit dem Loch für die Befestigung der Aufsatzkappe geliefert.
- Einbringen der Pfeiler ins Erdreich und Eindrehen der Anker. Anschließend wird der Draht für die Längsverspannung der Anlage in die vorgesehene Einkerbung der Aufsatzkappe eingelegt an der Lasche mit der Klemmscheibe positioniert und an den Erdankern lose befestigt. Vorzugsweise wird der Draht noch nicht verklemmt und gespannt.
- Einlegen des Drahtes für die Querverspannung und Positionierung an Lasche und Klemmleiste. Auch hier wird der Draht vorzugsweise nur lose vorgespannt und an den Erdankern positioniert.
- Danach wird die Anlage in Längs- und Querrichtung verspannt. Durch die erfindungsgemässe Aufsatzkappe ist ein verspannen der Querverspannung vor Netzmontage möglich, bei herkömmlichen Systemen kann die Querverspannung erst nach Netzmontage erfolgen. Während dem Spannen der Anlage werden die Pfeiler ausnivelliert, kleinere Höhenunterschiede werden durch die höhenverstellbare Aufsatzkappe ausgeglichen. Nach dem Ausnivellieren wird die Aufsatzkappe fest mit dem Pfeiler verschraubt. Anschliessend werden die Drähte der Längs- und Querverspannung mit Schraube und Klemmscheibe fixiert.

Vorteile bei der Montage des Stützgerüstes sind z.B. wie folgt: Nur geringster Werkzeugeinsatz durch die erfindungsgemässe Aufsatzkappe. Ein Ausheben der Aufsatzkappe ist auch bei hoher Windbelastung nicht möglich. Einfaches und schnelles ausnivellieren der Anlage.

### BEISPIEL 2:

Die Netzmontage mit erfindungsgemässer Montageplakette:
Das Schutznetz wird schwimmend über die Anlage (anschliessend an den Aufbau des Stützgerüstes nach Beispiel 1) verlegt, ein verschrauben des Netzes mit der Aufsatzkappe wie bei herkömmlichen Systemen ist durch die erfindungsgemässe Montageplakette nicht mehr nötig. Das Netz wird zwischen der Montageplakette verklemmt, über den Pfeiler geführt und vorzugsweise mit den Montageclips an der Längsverspannung befestigt. Im Zwischenraum der Pfeiler können in Abständen (z.B. von zwei Metern) weitere Montageplaketten montiert werden. Das Netz muss nicht am First vernäht werden.

Vorteile der neuen Art der Netzbefestigung mit der erfindungsgemässen Montageplakette sind eine einfache Montage und ein schneller Austausch bei Reparaturen und Netzerneuerung.

### BEISPIEL 3:

Zur Montage von Folienhalterung mit Schutzfolien:
- Sofern nicht schon montiert, Montage des Foliendrahts 27, z.B. durch Einziehen in eine Pfeilerbohrung. Dieser Draht hat die vorgängige Funktion zur Befestigung der Schutzfolie. Der Foliendraht wird zweckmässigerweise auf einen Erdanker der Längsverspannung 15 gespannt. Erdanker sind normalerweise reihenendständig angeordnet.
- Montage der Folienarmhalterung 33 durch Umlegen um einen Pfeiler 11 und-Verschrauben der zwei Klammerteile 82 und 82' nahe des Pfeilers 11 und dadurch Umklammern des Pfeilers vorzugsweise unterhalb des Foliendrahts 27.
- Montage des ersten und zweiten Folienarms 29 und 31, insbesondere in den Aufnahmen 45 und 47. Die Folienarme werden in diesem Stadium noch nicht mit dem Folienarmen der angrenzenden Reihen verbunden. Jeder Folienarm ist mit einem Rasthaken 93 versehen der die Folienprofilstange 91 in Position hält. Der Rasthaken wird jeweils durch einen Rastbolzen in seiner Position gehalten.
- Im Anschluss kann bei Bedarf der Firstbügel 23 aufgesetzt und der Firstdraht 25 (Firstseil) montiert werden. Danach werden die beiden Firstseitenseile 19 und 21 montiert. Über den dadurch entstehenden First kann eine Deckfolie montiert und mittels Haken zwischen die Seitenseile 19 und 21 gespannt werden.
- Die Schutzfolie ist an ihrer Längsseite vorteilhaferweise mit Löchern (z.B. mit einer Rasterweite von ca. 25 cm) versehen und kann dadurch an den Foliendraht 27 mittels Haken eingehängt werden. Im Pfeilerbereich wird die Folie zusätzlich mit der Montageplakette 100 befestigt und so gegen Abrieb am Pfeiler 11 geschützt. Die Montageplakette weist an beiden Hälften zur einfachen Montage Sollbruchstellen 113, 114, 115, 116 auf. Das Montageplakettenunterteil 103 wird an den Sollbruchstellen 113, 114 gebrochen, die Montageplakette 100 kann jetzt um den Pfeiler gelegt werden und mit den Rasthaken 105 in die Folie eingedrückt oder eingehängt werden. Anschliessend wird die erste Folienbahn durch Zusammenstecken des Montageplakettenunterteils 103 mit der ersten Hälfte des Montageplakettenoberteils 101 fixiert. Danach kann eine zweite Folienbahn mittels Haken oder Schleifen am Folienseil befestigt und in Rasthaken 105 des Montageplakettenunterteils 103 eingedrückt oder eingehängt werden, um die zweite Folienbahn mittels der Montageplatte im Pfeilerbereich zu befestigen. Mittels Verhaken der zweiten Hälfte des Montageplakettenoberteils 101 mit dem Montageplakettenunterteil 103 wird nun die zweite Folienbahn am den Pfeiler 11 fixiert. Beide Folienbahnen hängen vorerst an Foliendraht 27 und Pfeiler 11 runter.
- Am herunterhängenden zweiten längsseitigen Rand der ersten und zweiten Folienbahn ist eine Lasche eingearbeitet, in welche eine Folienprofilstange 91 eingeschoben wird. Die einander entgegen gerichteten Folienarme 29, 31 zweier benachbarter Reihen werden vorzugsweise mit den montierten Folienbahnen angehoben und mittig verbunden, z.B. durch verschrauben. Nun kann die Schutzfolie gespannt werden, indem jede Folienprofilstangen 91 mittels Rasthaken 93 und Rastbolzen 94 arretiert wird. Die Schutzfolie ist nun gespannt und funktionsbereit, z.B. als Regenschutzfolie oder Sonnendach.

Die Vorteile einer derartig montierten Schutzfolie sind die folgenden: Die Konstruktion ist äusserst stabil. Es entstehen keine Seilverspannungen, welche während der Bewirtschaftung stören oder sogar gefährlich in Kopfhöhe montiert sind. Die Möglichkeit die Arretierung der Schutzfolie durch öffnen der Rasterhaken zu lösen und die Möglichkeit das gesamte Foliensystem abzuklappen bieten beste Bedingungen für servicefreundlich Reparatur- und Wartungsarbeiten. Schnelles lösen der Folie und bequemes Einrollen unter den First bzw. unter die über Firstbügel und Firstseitenseile gespannte Deckfolie sind im Betrieb äusserst nützlich, sobald die Bedingungen für die Bepflanzung geändert werden müssen. Durch die Montageplakette reibt die Folie nicht an den Betonpfeilern, da Sie auf Abstand gehalten wird. Eine Abnutzung der Schutzfolie ist somit gegenüber herkömmlichen Witterungsschutzanlagen erheblich reduziert.

### BEZUGSZEICHENLISTE:

- 11, 11', 11": Support, insbesondere Pfeiler
- 13, 13', 13": Befestigungselement, insb. Als Aufsatzkappe ausgeführt
- 14: Längliches Montageteil
- 15, 15": Längsverspannung, i.e. Spannseil oder -draht in Längsrichtung einer Pflanzenkultur
- 17, 17': Querverspannung, i.e. Spannseil oder -draht in Querrichtung einer Pflanzenkultur
- 19: erstes Firstseitenseil (erster Deckdraht)
- 21: zweites Firstseitenseil (zweiter Deckdraht)
- 23, 23': Firstbügel
- 25: Firstseil
- 27, 27": Folienseil (Foliendraht)
- 28: erste Durchgangsbohrung im Pfeiler
- 29, 29": erster Folienarm
- 31, 32": zweiter Folienarm
- 33: Folienarmhalterung
- 34: Deckel
- 35: erste Klemmeinrichtung
- 36: zweite Klemmeinrichtung
- 37: erste Klemmbacke der ersten Klemmeinrichtung
- 38: erste Klemmbacke der zweiten Klemmeinrichtung
- 39: erste Klemmfläche der ersten Klemmeinrichtung
- 40: erste Klemmfläche der zweiten Klemmeinrichtung
- 41: zweite Klemmbacke der zweiten Klemmeinrichtung, z.B. ausgeführt als Klemmleiste oder Klemmplatte
- 42: Klemmschraube
- 43: Seil- bzw. Drahtaufnahme
- 45: erste Aufnahme für einen Folienarm
- 47: zweite Aufnahme für einen Folienarm
- 49: Mantelwandung
- 51: erster Schlitz
- 53: zweiter Schlitz
- 55: Hinterschneidung im ersten Schlitz
- 57: Hinterschneidung im zweiten Schlitz
- 59: Aussparung im ersten Schlitz
- 61: Aussparung im zweiten Schlitz
- 63, 63a, 63b: dritter Schlitz, bzw. Schlitzpaar
- 65, 65a, 65b: Hinterschneidung im dritten Schlitz, bzw. Schlitzpaar
- 67: erstes Bohrloch einer Durchgangsbohrung
- 69: zweites Bohrloch einer Durchgangsbohrung
- 71: zweite Durchgangsbohrung im Pfeiler (insb. oberhalb der Ersten)
- 73: erster Firstbügelarm
- 75: zweiter Firstbügelarm
- 77: erste Aufnahme für Firstseitenseil
- 79: zweite Aufnahme für Firstseitenseil
- 81: Einbuchtung
- 82: erstes Klammerteil
- 82': zweites Klammerteil
- 83: Aufnahmeausbuchtung
- 84, 84': erster Arm eines Klammerteils
- 85, 85': zweiter Arm eines Klammerteils
- 86: Schraube
- 87: Abstandshöcker
- 88: Abstandshöcker
- 89: Folienarmverbindung
- 91, 91': Folienprofilstange
- 93: Rasthaken
- 94: Rastbolzen
- 95: Lochpaar
- 100: Montageplakette
- 101: erste, obere Platte; insbesondere als erstes Ringteil ausgeführt
- 102: erste Ringfläche
- 103: zweite, untere Platte; insbesondere als zweites Ringteil ausgeführt
- 104: zweite Ringfläche
- 105: Haken, z.B. als Rasthaken ausgeführt
- 107: Hakengegenstück
- 108: erster Greifer
- 109: zweiter Greifer
- 111: Rutschstopper
- 113: Sollbruchstelle
- 114: Sollbruchstelle
- 115: Sollbruchstelle
- 116: Sollbruchstelle

## Patentansprüche

1. Ein Befestigungselement für eine Witterungsschutzvorrichtung mit einem länglichen eine Längsachse aufweisenden Montageteil und wenigstens einer am Montageteil angeordneten ersten Klemmeinrichtung (35) zum Festklemmen eines ersten Spannseils (15), **dadurch gekennzeichnet,**
**dass** eine zweite Klemmeinrichtung (36) zum Festklemmen eines zweiten Spannseils (17) vorgesehen ist, wobei die erste und zweite Klemmeinrichtung in Längsrichtung des Montageteils versetzt zueinander am Montageteil angeordnet sind.

2. Befestigungselement nach dem vorhergehenden Anspruch 1, **dadurch gekennzeichnet, dass** im Montageteil ein erster Schlitz (51) zur Aufnahme des ersten Spannseils (15) und ein zweiter Schlitz (53) zur Aufnahme des zweiten Spannseils (17) ausgebildet ist.

3. Befestigungselement nach Anspruch 2, **dadurch gekennzeichnet, dass** zur Aufnahme des ersten Spannseils (15) der erste Schlitz (51) bis zur ersten Klemmeinrichtung (35) ausgebildet ist und zur Aufnahme des zweiten Spannseils (17) der zweite Schlitz (53) bis zur zweiten Klemmeinrichtung (36) ausgebildet ist.

4. Befestigungselement nach einem der vorhergehenden Ansprüche 2 oder 3, **dadurch gekennzeichnet, dass** die erste Klemmeinrichtung (35) mit dem ersten Schlitz (51) gepaart ist und die zweite Klemmeinrichtung (36) mit dem zweiten Schlitz (53) gepaart ist.

5. Befestigungselement nach einem der vorhergehenden Ansprüche 2 - 4, **dadurch gekennzeichnet, dass** der erste Schlitz (51) und der zweite Schlitz (53) mit je einer Hinterschneidung (55, 57) ausgeführt ist.

6. Befestigungselement nach einem der vorhergehenden Ansprüche 1 - 5, **dadurch gekennzeichnet, dass** die erste und zweite Klemmeinrichtung (35, 36) jeweils zwei relativ zueinander verstellbare Klemmbacken mit Klemmflächen aufweisen.

7. Befestigungselement nach dem vorhergehenden Anspruch 6, **dadurch gekennzeichnet, dass** die Klemmflächen der Klemmbacken um 70 bis 110 Grad, vorzugsweise um 80 bis 100 Grad, versetzt zueinander angeordnet sind.

8. Befestigungselement nach einem der vorhergehenden Ansprüche 6 oder 7, **dadurch gekennzeichnet, dass** die Klemmbacken mittels einer Schraubverbindung miteinander verbind- und feststellbar sind.

9. Befestigungselement nach einem der vorhergehenden Ansprüche 6 - 8, **dadurch gekennzeichnet, dass** die Klemmbacken mittels Schraube und Klemmscheibe feststellbar sind.

10. Befestigungselement nach einem der vorhergehenden Ansprüche 1 - 9, **dadurch gekennzeichnet, dass** das Montageteil ein zylindrisches Hohlprofil ist.

11. Befestigungselement nach einem der vorhergehenden Ansprüche 1-10, **dadurch gekennzeichnet, dass** zum Befestigen an einem Support (11) zumindest eine Durchgangsbohrung (67, 69) quer zur Längsachse des Montageteils, vorzugsweise ausgeführt als Langloch, vorgesehen ist.

12. Witterungsschutzvorrichtung zum Tragen eines Schutznetzes und/oder einer Schutzfolie, beinhaltend Befestigungselemente (13) nach einem der Ansprüche 1 bis 11 aufgesetzt auf einen Support (11).

13. Witterungsschutzvorrichtung nach Anspruch 12 **dadurch gekennzeichnet, dass** Montageplaketten (100) zum Klemmen und Fixieren eines Schutznetzes und/oder einer Schutzfolie an die Befestigungselemente (13) vorgesehen sind.

14. Witterungsschutzvorrichtung nach Anspruch 13, **dadurch gekennzeichnet, dass** das Schutznetz und/oder die Schutzfolie mittels der Montageplaketten (100) über die Befestigungselemente gestülpt und/ oder um die Befestigungselemente gelegt werden können, wobei vorzugsweise die Montageplaketten mit Spiel in die Befestigungselemente eingehängt bzw. um die Befestigungselemente umgelegt werden können, sodass bei Zug auf das aufgespannte Schutznetz und/oder die aufgespannte Schutzfolie die Montageplaketten gegenüber den Befestigungselementen verschiebbar sind.

15. Witterungsschutzvorrichtung nach einem der vorangehenden Ansprüche 12-14, **dadurch gekennzeichnet, dass**
- der Support (11) eine Vielzahl von Pfeilern beinhaltet, welche voneinander beabstandet in Längs- und Querreihen angeordnete sind,
- Spannseile (15) einer Längsverspannung die Pfeiler in Längsreihen miteinander verspannen, und
- Spannseile (17) einer Querverspannung die Pfeiler in Querreihen miteinander verspannen,
wobei die Spannseile der Längsverspannung und der Querverspannung sich an bzw. in den Befestigungselementen kreuzen.
